# EUROPÄISCHE PATENTSCHRIFT

(11) **EP 1 141 122 B1**
(45) Veröffentlichungstag und Bekanntmachung des Hinweises auf die Patenterteilung: **15.09.2004**
(21) Anmeldenummer: 99963561.8
(22) Anmeldetag: 16.12.1999
(51) Int. Cl.: C08L 51/04, C08L 25/08, C08L 53/02, C08L 69/00

(54) **THERMOPLASTISCHE FORMMASSEN**
THERMOPLASTIC MOULDING MATERIALS
MATIERES MOULABLES THERMOPLASTIQUES

(30) Priorität: 16.12.1998 DE 19858141
(43) Veröffentlichungstag der Anmeldung: 10.10.2001
(73) Patentinhaber: BASF AKTIENGESELLSCHAFT, 67056 Ludwigshafen (DE)
(72) Erfinder: GÜNTHERBERG, Norbert, D-67346 Speyer (DE); WÜNSCH, Josef, D-67105 Schifferstadt (DE); ITTEMANN, Peter, D-68623 Lampertheim (DE); KNOLL, Konrad, D-67069 Ludwigshafen (DE); NIESSNER, Norbert, D-67159 Friedelsheim (DE)
(74) Vertreter: Isenbruck, Günter, Dr.
(86) Internationale Anmeldenummer: PCT/EP1999/010016
(87) Internationale Veröffentlichungsnummer: WO 2000/036010

(56) Entgegenhaltungen:
- EP-A- 0 483 916
- EP-A- 0 791 631
- US-A- 5 760 134
- US-A- 5 814 702

## Beschreibung

Die vorliegende Erfindung betrifft thermoplastische Formmassen mit verbesserten Verarbeitungseigenschaften auf der Basis von Pfropfcopolymeren und Blockcopolymeren.

Mischungen schlagzäher thermoplastischer Copolymere auf der Basis vinylaromatischer Polymere und Pfropfkautschuke sind als sogenannte ABS- oder ASA-Polymerisate dem Fachmann bekannt und kommerziell erhältlich. Auch Blends solcher ASA- bzw. ABS-Polymerisate mit anderen Thermoplasten, insbesondere Polycarbonaten sind bekannt.

Bedingt durch die Einführung immer schnellerer Verarbeitungsmaschinen wird von solchen Produkten insbesondere eine hohe Fließfähigkeit bei der Verarbeitung im Spritzguß und eine bruchlose Entformbarkeit gefordert. Bei der Formgebung durch Tiefziehen kommt es besonders auf eine hohe Bruchdehnung an.

Zur Optimierung dieser Eigenschaften werden in der Regel verschiedene Additive eingesetzt, die jedoch oft nur einen Parameter verbessern und dabei eine andere gewünschte Eigenschaft negativ beeinflussen. So führen Additive zur Verbesserung der Fließfähigkeit und der Tiefzieheigenschaften oft zu Einbußen bei den mechanischen Eigenschaften, während Additive zur Verbesserung der Entfonnbarkeit häufig die Fließfähigkeit beeinträchtigen.

Aus US 5,760,134 sind thermoplastische Formmassen bekannt aus,
A) einem Pfropfcopolymeren aus einem elastomeren Polyacrylat-Pfropfkern und einer Pfropfschale,
B) einem thermoplastischen Polymeren, aufgebaut aus Styrol und/oder α-Methylstyrol, gegebenenfalls Acrylnitril und gegebenenfalls weiteren Monomeren, und
C) einem elastomeren Blockcopolymeren, aufgebaut aus mindestens einem Block A, der aus vinylaromatischen Monomereinheiten gebildet wird und die harte Phase bildet und/oder einem Block B, der aus Dienmonomeren gebildet wird und eine erste elastomere (weiche) Phase bildet, und mindestens einem elastomeren Block B/A, der sowohl aus vinylaromatischen als auch aus Dien-Monomeren gebildet wird und eine weiche Phase bildet.

Der relative Anteil an 1,2-Verknüpfungen des Polydiens im Block B/A der Komponente C ist in US 5,760,134 nicht offenbart.

Aufgabe der vorliegenden Erfindung ist es daher, thermoplastische Formmassen auf der Basis von ABS- oder ASA-Polymerisaten zur Verfügung zu stellen, die ein ausgewogenens Eigenschaftsspektrum aufweisen.

In einer ersten erfindungsgemäßen Ausführungsform wurde diese Aufgabe durch thermoplastische Formmassen gelöst, enthaltend
(A) 5 bis 98 Gew.-%, bezogen auf das Gesamtgewicht der Formmassen, eines kautschukartigen Pfropfcopolymerisats, aufgebaut aus
   (a₁) 30 bis 90 Gew.-%, bezogen auf (A), einer Pfropfgrundlage mit einer Glasübergangstemperatur (T_{g}) von unter -10 °C aus
      (a₁₁) einem zumindest teilweise vernetzten Acrylester-Polymerisat gebildet aus
         (a₁₁₁) 50 bis 99,9 Gew.-%, bezogen auf (a₁₁), mindestens eines Alkylacrylates mit 1 bis 10 C-Atomen im Alkylrest,
         (a₁₁₂) 0,1 bis 5 Gew.-%, bezogen auf (a₁₁), mindestens eines polyfunktionellen, vernetzend wirkenden Monomeren und
         (a₁₁₃) 0 bis 49,9 Gew.-%, bezogen auf (a₁₁), mindestens eines weiteren mit (a₁₁₁) copolymerisierbaren Monomeren aus der Gruppe der Vinylalkylether mit 1 bis 8 C-Atomen im Alkylrest, Butadien, Isopren, Styrol, Acrylnitril, Methacrylnitril und/oder Methylmethacrylat
         und/oder
      (a₁₂) einem Dienpolymerisat, aufgebaut aus
         (a₁₂₁) 60 bis 100 Gew.-%, bezogen auf (a₁₂), mindestens eines Diens und
         (a₁₂₂) 0 bis 40 Gew.-%, bezogen auf (a₁₂), weiterer copolymerisierbarer Monomere aus der Gruppe der Alkylacrylate mit 1 bis 10 C-Atomen im Alkylrest, Vinylalkylether mit 1 bis 8 C-Atomen im Alkylrest, Butadien, Isopren, Styrol, Acrylnitril, Methacrylnitril und/oder Methylmethacrylat,
   (a₂) 10 bis 70 Gew.-%, bezogen auf (A), einer auf die Pfropfgrundlage aufgepfropften Pfropfauflage mit einer T_{g} von mehr als 50 °C, aufgebaut aus
      (a₂₁) 50 bis 95 Gew.-%, bezogen auf (a₂), mindestens eines vinylaromatischen Monomeren,
      (a₂₂) 5-50 Gew.-%, bezogen auf (a₂), mindestens eines polaren, copolymerisierbaren Comonomeren aus der Gruppe Acrylnitril, Methacrylnitril, Ester der(Meth)acrylsäure mit 1 bis 4 C-Atomen im Alkylrest, Maleinsäureanhydrid und dessen Imide, (Meth)acrylamid und/oder Vinylalkylether mit 1 bis 8 C-Atomen im Alkylrest oder deren Mischung,
(B) 1 bis 90 Gew.-%, bezogen auf das Gesamtgewicht der Formmasse, eines Copolymerisats aus
   (b₁) 50 bis 99 Gew.-%, bezogen auf (B), mindestens eines vinylaromatischen Monomeren
      und
   (b₂) 1 bis 50 Gew.-%, bezogen auf (B), Monomeren wie für (a₂₂) beschrieben,
(C) 1 bis 70 Gew.-%, bezogen auf (A), (B), (C) und gegebenenfalls (D) und (E), eines kautschukelastischen Blockcopolymerisates aus
   mindestens einem einpolymerisierte Einheiten aus vinylaromatischen Monomeren aufweisenden, eine Hartphase bildenden Block C_{A} und
   mindestens einem einpolymerisierte Einheiten aus vinylaromatischen Monomeren sowie einem Dien aufweisenden elastomeren, eine Weichphase bildenden Block C_{B/A},
   wobei die Glasübergangstemperatur T_{g} des Blocks C_{A} über 25°C und die des Blocks C_{B/A} unter 25°C liegt und
   das Phasenvolumen-Verhältnis von Block C_{A} zu Block C_{B/A} so gewählt ist, daß der Anteil der Hartphase am gesamten Blockcopolymerisat 1 bis 40 Vol.-% und der Gewichtsanteil des Diens im gesamten Blockcopolymerisat weniger als 50 Gew.-% beträgt,
   wobei der relative Anteil an 1,2-Verknüpfungen des Polydiens, bezogen auf die Summe an 1,2- und 1,4-cis/trans-Verknüpfungen, unterhalb von 15% liegt,
   und
(D) 0-300 Gew.-%, bezogen auf das Gewicht der Komponenten (A) bis (C), eines Polycarbonats,
(E) 0 bis 30 Gew.-%, bezogen auf das Gesamtgewicht der Formmassen; üblicher Zusatzstoffe und Verarbeitungshilfsmittel.

Die erfindungsgemäßen thermoplastischen Formmassen weisen gegenüber vergleichbaren Formmassen eine bessere Fließfähigkeit bei gleichzeitig verbesserter Entformbarkeit, Tiefziehfestigkeit und nicht verschlechterter Farbhaftung auf und sind weitgehend frei von ausdünstenden und ausschwitzenden Bestandteilen.

Sie eignen sich zur Herstellung von Folien, Formkörpern (besonders Platten) und Fasern, die durch Thermoformen und Tiefziehen hervorragend weiterverarbeitet werden können, ebenso wie zur Herstellung von Spritzgußteilen, insbesondere für schnelle Verarbeitung mit kurzen Taktzeiten.

Sie weisen, für den Fall, daß (A) ein Butadien-Kautschuk ist, eine hervorragende Durchstoßfestigkeit und eine deutlich verbesserte Kerbschlagzähigkeit auf. Für den Fall, daß (A) ein Acrylat-Kautschuk ist, ist insbesondere die sehr gute Schlagzähigkeit hervorzuheben.

Für viele anspruchsvolle Anwendungen ist für eine gute Verarbeitbarkeit, eine hohe Fließfähigkeit, eine gute Entformbarkeit und für das Fertigteil eine gute Schlagzähigkeit mit und ohne Vorschädigung sowie eine gute multiaxiale Zähigkeit (d.h., die Zähigkeit im Formkörper ist in jeder Richtung gut und besitzt keine Vorzugsrichtung) erforderlich, ohne daß die anderen Eigenschaften wie Wärmeformbeständigkeit, Steifigkeit und Biegefestigkeit wesentlich verschlechtert werden.

Üblicherweise werden zur Verbesserung der Fließfähigkeit Gleitmittel zugegeben, oft unter Reduzierung des Kautschukgehalts. Produkte mit einem geringeren Kautschukgehalt sind besser fließfähig als gleichartige Produkte mit einem hohen Kautschukgehalt, die eine gute Zähigkeit aufweisen, jedoch eine schlechte Fließfähigkeit. Eine gleichzeitige Verbesserung von Zähigkeit und Fließfähigkeit ist nur durch Änderung des Kautschukgehalts nicht möglich.

Eine weitere Aufgabe der vorliegenden Erfindung ist es daher, thermoplastische Formmassen auf der Basis von ABS- oder ASA-Polymerisaten, insbesondere auf der Basis von ABS-Polymerisaten, zur Verfügung zu stellen, die gegenüber den herkömmlichen Materialien eine bessere Fließfähigkeit und Zähigkeit aufweisen und des weiteren besser entformbar sind, sowie eine hellere Eigenfarbe aufweisen.

Diese Aufgabe wurde durch eine weitere Ausführungsform der vorliegenden Erfindung gelöst. Diese Ausführungsform betrifft thermoplastische Formmassen, enthaltend
(A) 5 bis 98,9 Gew.-%, bezogen auf das Gesamtgewicht der Formmassen, mindestens eines kautschukartigen Pfropfcopolymerisats, aufgebaut aus
   (a₁) 30-90 Gew.-%, bezogen auf (A), einer Pfropfgrundlage mit einer Glasübergangstemperatur (T_{g}) von unter -10°C aus
      (a₁₁) einem zumindest teilweise vernetzten Acrylester-Polymerisat gebildet aus
         (a₁₁₁) 50 bis 99,9 Gew.-%, bezogen auf (a₁₁), mindestens eines Alkylacrylates mit 1-10 C-Atomen im Alkylrest,
         (a₁₁₂) 0,1 bis 5 Gew.-% bezogen auf (a₁₁) mindestens eines polyfunktionellen, vernetzend wirkenden Monomeren und
         (a₁₁₃) 0 bis 49,9 Gew.-% bezogen auf (a₁₁), mindestens eines weiteren mit (a₁₁₁) copolymerisierbaren Monomeren aus der Gruppe der Vinylalkylether mit 1 bis 8 C-Atomen im Alkylrest, Butadien, Isopren, Styrol, Acrylnitril, Methacrylnitril und/oder Methylmethacrylat
         und/oder
      (a₁₂) einem Dienpolymerisat, aufgebaut aus
         (a₁₂₁) 60 bis 100 Gew.-%, bezogen auf (a₁₂), mindestens eines Diens und
         (a₁₂₂) 0 bis 40 Gew.-%, bezogen auf (a₁₂), weiterer copolymerisierbarer Monomere aus der Gruppe der Alkylacrylate mit 1 bis 10 C-Atomen im Alkylrest, Vinylalkylether mit 1 bis 8 C-Atomen im Alkylrest, Butadien, Isopren, Styrol, Acrylnitril, Methacrylnitril und/oder Methylmethacrylat,
   (a₂) 10 bis 70 Gew.-%, bezogen auf (A), einer auf die Pfropfgrundlage aufgepfropften Auflage mit einer Glasübergangstemperatur (T_{g}) von mehr als 50°C, aufgebaut aus
      (a₂₁) 65 bis 95 Gew.-%, bezogen auf (a₂), mindestens eines vinylaromatischen Monomeren,
      (a₂₂) 5 bis 35 Gew.-%, bezogen (a₂), mindestens eines polaren copolymerisierbaren Comonomeren aus der Gruppe Acrylnitril, Methacrylnitril, Ester der (Meth)acrylsäure mit 1 bis 4 C-Atomen im Alkylrest, Maleinsäureanhydrid und dessen Amide, (Meth)acrylamid und/oder Vinylalkylether mit 1 bis 8 C-Atomen im Alkylrest oder deren Mischung,
(B) 1 bis 90 Gew.-%, bezogen auf das Gesamtgewicht der Formmasse, eines Copoymerisats aus
   (b₁) 69 bis 81 Gew.-% bezogen auf (B), mindestens eines vinylaromatischen Monomeren
      und
   (b₂) 19 bis 31 Gew.-%, bezogen auf (B), Monomeren wie für (a₂₂) beschrieben,
(C) 0,1 bis 70 Gew.-%, bezogen auf (A), (B), (C) und gegebenenfalls (D) und (E), eines kautschukelastischen Blockcopolymerisates aus
   mindestens einem einpolymersierte Einheiten aus vinylaromatischen Monomere aufweisenden, eine Hartphase bildenden Block C_{A} und
   mindestens einem einpolymerisierte Einheiten aus vinylaromatischen Monomeren sowie einem Dien aufweisenden elastomeren, eine Weichphase bildenden Block C_{B/A}
   wobei die Glasübergangstemperatur T_{g} des Blocks C_{A} über 25°C und die des Blocks C_{B/A} und 25°C liegt und
   das Phasenvolumen-Verhältnis von Block C_{A} zu Block C_{B/A} so gewählt ist, daß der Anteil der Hartphase am gesamten Blockcopolymerisat 1 bis 40 Vol.-% und der Gewichtsanteil des Diens im gesamt Blockcopolymerisat weniger als 50 Gew.-% beträgt,
   wobei der relative Anteil an 1,2-Verknüpfungen des Polydiens, bezogen auf die Summe an 1,2- und 1,4-cis/trans-Verknüpfungen unterhalb von 15% liegt,
   und
(D) 0 bis 300 Gew.-%. bezogen auf das Gewicht der Komponenten (A) bis (C), eines Polycarbonats, S-MSA-Copolymeren (Styrol-Maleinsäureanhydrid-Copolymeren), S-Imid-MSA-Copolymeren (Styrol-Imid-Maleinsäureanhydrid-Copolymeren), S-Imid-AN-MSA-Copolymeren (Styrol-Imid-Acrylnitril-Maleinsäureanhydrid-Copolymeren), eines Polymethacrylimids oder eines Polymethylmethacrylats,
(E) 0 bis 30 Gew.-% bezogen auf das Gesamtgewicht der Formmasse, üblicher Zusatzstoffe und Verarbeitungshilfsmittel.

Als Pfropfgrundlage (a₁) wird in dieser Ausführungsform bevorzugt ein Dienpolymerisat (a₁₂) eingesetzt. Besonders bevorzugt wird ein Butadienpolymerisat eingesetzt, wobei ganz besonders bevorzugt ein Butadienpolymerisat eingesetzt wird und der Anteil der Komponente C 0,1 bis 15 Gew-%, bezogen auf (A), (B), (C) und gegebenenfalls (D) und (E), beträgt.

Die Fließfähigkeit und die Zähigkeit der erfindungsgemäßen Formmassen, insbesondere solcher auf der Basis von ABS, d.h., in denen als Pfropfgrundlage (a₁) ein Dienpolymerisat (a₁₂) eingesetzt wird, kann bereits mit geringen Mengen der Komponente C signifikant verbessert werden. Dies ist insbesondere dann der Fall, wenn der Gehalt der Komponente (b₂) in dem eingesetzten Copolymerisat (B) im Bereich von 19 bis 31 Gew.-%, bezogen auf die Komponente (B), beträgt.

Neben einer verbesserten Fließfähigkeit und Zähigkeit mit und ohne Vorschädigung schon bei kleinen Anteilen der Komponente C wird gleichzeitig eine gute Entformbarkeit und eine nur geringe Eigenfarbe erreicht. Bei der Extrusion zu Platten wird in den erfindungsgemäßen Formmassen gemäß dieser Ausführungsform durch Zugabe der Komponente (C) die Schlagzähigkeit senkrecht zur Extrusionsrichtung wesentlich verbessert.

Daher eignen sich die erfindungsgemäßen Formmassen gemäß dieser Ausführungsform insbesondere zur Herstellung von Formkörpern, Platten, Profilen, Rohren und Fasern, die durch Thermoformen und Tiefziehen hervorragend weiterverarbeitet werden können, ebenso wie zur Herstellung von Spritzgußteilen, insbesondere bei einer schnellen Verarbeitung mit kurzen Taktzeiten und hohen Ansprüchen an die Mechanik des Fertigteils.

Als Komponente (A) enthalten die erfindungsgemäßen Formmassen gemäß der ersten Ausführungsform 5 bis 98, vorzugsweise 10 bis 90 und insbesondere 15 bis 80 Gew.-%, bezogen auf das Gesamtgewicht der Formmassen, eines kautschukartigen Pfropfcopolymerisats.

Die erfindungsgemäßen Formmassen enthalten gemäß der zweiten Ausführungsform als Komponente (A) 5 bis 98,9, vorzugsweise 5 bis 98, insbesondere 10 bis 90 und ganz besonders bevorzugt 15 bis 80 Gew.-%, bezogen auf das Gesamtgewicht der Formmassen, mindestens eines kautschukartigen Pfropfcopoly-merisats.

Dieses Pfropfcopolymerisat (A) ist aufgebaut aus einer Pfropfgrundlage (a₁) mit einer Glasübergangstemperatur T_{g} von unter -10°C und einer Pfropfauflage (a₂) mit einer Glasübergangstemperatur T_{g} von mehr als 50°C, wobei der Mengenanteil der Pfropfgrundlage (a₁₁)+(a₁₂) 30 bis 90, vorzugsweise 35 bis 85 und insbesondere 40 bis 80 Gew.-% und die Pfropfauflage (a₂) entsprechend 10 bis 70, vorzugsweise 15 bis 65 und insbesondere 20 bis 60 Gew.-% ausmacht.

Der Aufbau des Pfropfcopolymerisats (A) wird nachfolgend näher erläutert.

Die Pfropfgrundlage (a₁) ist aufgebaut aus
(a₁₁) einem zumindest teilweise vemetzten Acrylester-Polymerisat gebildet aus
   (a₁₁₁) 50 bis 99,9 Gew.-%, bezogen auf (a₁₁), mindestens eines Alkylacrylates mit 1 bis 10 C-Atomen im Alkylrest
   (a₁₁₂) 0,1 bis 5 Gew.-%, bezogen auf (a₁₁), mindestens eines polyfunktionellen, vernetzend wirkenden Monomeren und
   (a₁₁₃) 0 bis 49,9 Gew.-%, bezogen auf (a₁₁), mindestens eines weiteren mit (a₁₁₁) copolymerisierbaren Monomeren aus der Gruppe der Vinylalkylether mit 1 bis 8 C-Atomen im Alkylrest, Butadien, Isopren, Styrol, Acrylnitril, Methacrylnitril und/oder Methylmethacrylat
   und / oder
(a₁₂) einem Dienpolymerisat, aufgebaut aus
   (a₁₂₁) 60 bis 100 Gew.-%, bezogen auf (a₁₂), eines oder mehrerer Diene, und
   (a₁₂₂) 0 bis 40 Gew.-%, bezogen auf (a₁₂), weiterer copolymerisierbarer Monomere aus der Gruppe der Vinylalkylether mit 1 bis 8 C-Atomen in der Alkylgruppe, Alkylacrylaten mit 1 bis 10 C-Atomen in der Alkylgruppe, Isopren, Styrol, Acrylnitril, Methacrylnitril und/oder Methylmethacrylat.

Erfindungsgemäß verwendbar sind dementsprechend Formmassen, welche in der Komponente (A) entweder nur ein Acrylester-Polymerisat (a₁₁) oder nur ein Butadienpolymerisat (a₁₂) oder eine Mischung zweier Polymere (a₁₁) und (a₁₂) als Pfropfgrundlage enthalten.

Im Falle der Verwendung von Mischungen aus den Polymeren (a₁₁) und (a₁₂) ist das Mischungsverhältnis nicht kritisch, liegt aber im allgemeinen Bereich von 4:1 bis 1:4, insbesondere von 1:2 bis 2: 1.

Bevorzugt sind solche thermoplastischen Formmassen, in denen als Komponente (A) ein Pfropfcopolymerisat mit einer Pfropfgrundlage (a₁₂) (Dienpolymerisat, insbesondere Butadienpolymerisat) eingesetzt wird.

Die Acrylester-Polymerisate (a₁₁) sind aufgebaut aus
(a₁₁₁) 50 bis 99,9 Gew.-%, vorzugsweise 55-98 Gew.-%, und insbesondere 60-90 Gew.-%, bezogen auf (a₁₁), mindestens eines Alkylacrylates mit 1 bis 10 C-Atomen im Alkylrest. Bevorzugte Acrylate sind solche mit 2 bis 10 C-Atomen im Alkylrest, insbesondere seien hier Ethylacrylat, tert.-, iso- und n-Butylacrylat und 2-Ethylhexylacrylat genannt, wovon die beiden letztgenannten ganz besonders bevorzugt sind.
   (a₁₁₂) 0,1 bis 5 Gew.-%, vorzugsweise 0,25 bis 4 Gew.-% und insbesondere 0,5 bis 3 Gew.-%, bezogen auf (a₁₁), vernetzend wirkender Monomere. Beispielhaft seien polyfunktionelle Monomere mit mindestens 2 olefinischen, nichtkonjugierten Doppelbindungen genannt, von denen Ethylenglycoldiacrylat, Butandioldiacrylat, Hexandioldiacrylat, Ethylenglycoldimethacrylat, Butandioldimethacrylat, Hexandioldimethacrylat, Divinylbenzol, Diallylmaleat, Diallylfumarat, Diallylphthalat, Triallylcyanurat, Triallylisocyanurat, Tricyclodecenylacrylat, Dihydrodicyclopentadienylacrylat, Triallylphosphat, Allylacrylat, Allylmethacrylat und Dicyclopentadienylacrylat (DCPA) namentlich genannt seien (vgl. DE-C-12 60 135).
   (a₁₁₃) 0 bis 49,9 Gew.-%, vorzugsweise 5 bis 44,9 Gew.-% und insbesondere 10 bis 39,9 Gew.-%, bezogen auf (a₁₁), mit (a₁₁₁) copolymerisierbare Monomere aus der Gruppe der Vinylalkylether mit 1-8 C-Atomen im Alkylrest (z.B. Vinylmethylether, Vinylpropylether, Vinylethylether), Butadien, Isopren, Styrol, Acrylnitril, Methacrylnitril und/oder Methylmethacrylat.

Durch Verwendung solcher Comonomere läßt sich das Eigenschaftsprofil der Polymerisate (a₁₁) z.B. hinsichtlich Vernetzungsgrad steuern, was in manchen Fällen wünschenswert sein kann.

Verfahren zur Herstellung von Polymeren (a₁₁) sind dem Fachmann bekannt, und in der Literatur beschrieben. Entsprechende Produkte sind auch kommerziell im Handel erhältlich.

Als besonders vorteilhaft hat sich in einigen Fällen die Herstellung durch Emulsionspolymerisation, wie in DE-C 12 60 135 beschrieben, erwiesen.

Bei der Herstellung des Pfropfmischpolymerisats (A) nach der in der DE-C 12 60 135 beschriebenen Methode wird zunächst die Pfropfgrundlage (a₁) hergestellt. Wenn die Pfropfgrundlage ein Acrylat-Kautschuk sein soll, (a₁₁), wird/werden ein oder mehrere Acrylsäureester (a₁₁₁), ein polyfunktionelles Monomeres (a₁₁₂) und gegebenenfalls ein weiteres copolymerisierbares Monomeres (a₁₁₃) in wäßriger Emulsion bei 20 bis 100°C, bevorzugt zwischen 50 und 80°C polymerisiert.

Es können die üblichen Emulgatoren wie die Alkalisalze von Alkyl- oder Arylsulfonsäuren, Alkylsulfate, Fettalkoholsulfonate, Salze höherer Fettsäuren mit 10 bis 30 Kohlenstoffatomen oder Harzseifen verwendet werden. Vorzugsweise setzt man die Natrium- oder Kaliumsalze von Alkylsulfonaten oder von Fettsäuren mit 10 bis 18 Kohlenstoffatomen ein. Es ist günstig, die Emulgatoren in einer Menge von 0,5 bis 5 Gew.-%, insbesondere von 0,5 bis 2 Gew.-%, bezogen auf das Gesamtgewicht der für die Herstellung der Pfropfgrundlage (a₁) verwendeten Monomeren, einzusetzen. Im allgemeinen wird bei einem Wasser/Monomer-Verhältnis von 2:1 bis 0,7:1 gearbeitet.

Als Polymerisationsinitiatoren dienen insbesondere die gebräuchlichen Persulfate, wie Kaliumperoxodisulfat; geeignet sind jedoch auch Redoxsysteme. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie 0,1 bis 3 Gew.-% eines Molekulargewichtsreglers, wie Mercaptan, Terpinol oder dimeres α-Methylstyrol verwendet werden.

Die genauen Polymerisationsbedingungen, insbesondere Art, Dosierung und Menge des Emulgators werden innerhalb der oben angegebenen Bereiche so gewählt, daß der erhaltene Latex des vernetzten Acrylsäureester-Polymerisats (a₁₁) einen d₅₀-Wert im Bereich von etwa 30 bis 1000 nm, bevorzugt im Bereich von 50 bis 900 nm besitzt.

Der d₅₀-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder unter einer bestimmten Größe haben. Der mittlere Teilchendurchmesser, der auch als d₅₀-Wert der integralen Masseverteilung bezeichnet wird, ist dabei als der Wert definiert, bei dem 50 Gewichtsprozent der Teilchen einen kleineren und 50 Gewichtsprozent der Teilchen einen größeren Durchmesser als der d₅₀-Wert aufweisen.

An Stelle der Acrylatester-Polymerisate (a₁₁) können die Pfropfmischpolymerisate (A) auch Dienpolymerisate (a₁₂) als Pfropfgrundlage enthalten. Bei den Polymerisaten (a₁₂) handelt es sich um Diencopolymerisate, die neben 60 bis 100, vorzugsweise 70 bis 99 Gew.-%, eines oder mehrerer Diene, vorzugsweise Butadien oder Isopren noch bis zu 40, vorzugsweise 2 bis 30 Gew.-% weiterer copolymerisierbarer Monomere enthalten können. Als solche sind sowohl die unter (a₁₁₁) vorstehend beschriebenen Alkylacrylate als auch die mit (a₁₁₁) copolymerisierbaren Monomere (a₁₁₃) geeignet; wegen detaillierter Ausführungen sei auf die dortige Beschreibung verwiesen.

Wenn der Pfropfkern (a₁) ein Dienpolymerisat sein soll, wird zweckmäßig wie folgt verfahren: Das Elastomer, die Pfropfgrundlage (a₁₂), wird hergestellt, indem die Komponenten (a₁₂₁) und (a₁₂₂) in wäßriger Emulsion in an sich bekannter Weise bei Temperaturen von 20 bis 100°C, vorzugsweise von 50 bis 90°C, polymerisiert werden.

Es können die üblichen, vorstehend bei der Herstellung des Acrylat-Polymerisats (a₁₁) beschriebenen Emulgatoren, Polymerisationsinitiatoren und weiteren Polymerisationshilfsstoffe wie Puffersubstanzen und Molekulargewichtsregler in den dort genannten Mengen eingesetzt werden.

Die genauen Polymerisationsbedingungen zur Herstellung des Dienpolymerisats (a₁₂), insbesondere Art, Dosierung und Menge des Emulgators, werden innerhalb der oben angegebenen Bereiche im einzelnen so gewählt, daß der erhaltene Latex des Dienpolymerisats (a₁₂) einen d₅₀-Wert (vgl.oben) im Bereich von etwa 50 bis 750 nm, vorzugsweise im Bereich von 70 bis 600 nm, besitzt. Alternativ kann auch ein Emulsionspolymerisat mit mittleren Teilchengrößen im Bereich von 60-150 nm agglomeriert werden, wie des z.B. in der DE-A 24 279 60 beschrieben ist.

Auf die Pfropfgrundlage (a₁₁) und/oder (a₁₂) wird eine Pfropfauflage (a₂) aufgepfropft, die durch Copolymerisation von
(a₂₁) 50 bis 95, vorzugsweise 60 bis 90 und insbesondere 62 bis 85 Gew.-%, bezogen auf (a₂), eines vinylaromatischen Monomeren, vorzugsweise Styrol oder substituierten Styrolen der allgemeinen Formel I 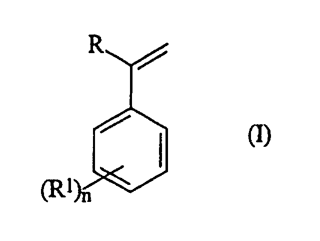 wobei R einen Alkylrest mit 1 bis 8 C-Atomen, ein Wasserstoffatom oder Halogen und R¹ Alkylreste mit 1 bis 8 C-Atomen oder ein Halogenatom darstellen und n den Wert 0, 1, 2 oder 3 hat, bevorzugt Styrol, α-Methylstyrol, p-Methylstyrol und tert.-Butylstyrol, und
(a₂₂) 5 bis 50, vorzugsweise 10 bis 40 und insbesondere 15 bis 38 Gew.-%, bezogen auf (a₂), eines polaren copolymerisierbaren Monomeren, aus der Gruppe Acrylnitril, Methacrylnitril, Ester der Meth(acrylsäure) mit 1 bis 4 C-Atomen im Alkylrest, Maleinsäureanhydrid und dessen Imide, (Meth)acrylamid und/oder Vinylalkylether mit 1-8 C-Atomen im Alkylrest oder deren Mischungen
erhalten wird.

Gemäß der zweiten erfindungsgemäßen Ausführungsform beträgt der Anteil der Komponenten (a₂₁) und (a₂₂) in der Pfropf auflage (a₂):
(a₂₁) 65 bis 95, vorzugsweise 67 bis 90 und insbesondere 70 bis 85 Gew.-%, bezogen auf (a₂) eines oben genannten vinylaromatischen Monomeren, und
(a₂₂) 5 bis 35, vorzugsweise 10 bis 33 und insbesondere 15 bis 30 Gew.-%, bezogen auf (a₂), eines oben genannten polaren copolymerisierbaren Monomeren.

Die Pfropfhülle (a₂) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in DE-C 1 260 135, DE-A 32 27 555, DE-A 31 49 357, DE-A 31 49 358 und DE-A 34 14 118 beschrieben ist.

Je nach den gewählten Bedingungen entsteht bei der Pfropfmischpolymerisation ein bestimmter Anteil an freien Copolymerisaten von Styrol und Acrylnitril.

Es ist vorteilhaft, die Pfropfmischpolymerisation auf das als Pfropfgrundlage (a₁) dienende Polymerisat wiederum in wäßriger Emulsion durchzuführen. Sie kann im gleichen System wie die Polymerisation der Pfropfgrundlage vorgenommen werden, wobei weiter Emulgator und Initiator zugegeben werden können. Diese müssen mit den zur Herstellung der Pfropfgrundlage (a₁) verwendeten Emulgatoren bzw. Initiatoren nicht identisch sein. So kann es z.B. zweckmäßig sein, als Initiator für die Herstellung der Pfropfgrundlage (a₁) ein Persulfat zu verwenden, zur Polymerisation der Pfropfhülle (a₂) jedoch ein Redoxinitiatorsystem einzusetzen. Im übrigen gilt für die Wahl von Emulgator, Initiator und Polymerisationshilfsstoffen das bei der Herstellung der Pfropfgrundlage (a₁) Gesagte.

Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird vorteilhaft so gesteuert, daß ein Pfropfgrad von 10 bis 60 Gew.-%, vorzugsweise von 15 bis 55 Gew.-%, resultiert.

Das Pfropfmischpolymerisat (A) ((a₁) + (a₂)) weist im allgemeinen eine mittlere Teilchengröße von vorzugsweise 30 bis 1000 nm, insbesondere von 100 bis 900 nm (d₅₀-Gewichtsmittelwert) auf. Die Bedingungen bei der Herstellung des Elastomeren a₁) und bei der Pfropfung werden daher vorzugsweise so gewählt, daß Teilchengrößen in diesem Bereich resultieren. Maßnahmen hierzu sind bekannt und z.B. in DE-C 1 260 135 und DE-A 28 26 925 sowie in Journal of Applied Polymer Science, Vol. 9 (1965), S. 2929 bis 2938, beschrieben. Die Teilchenvergrößerung des Latex des Elastomeren kann z.B. mittels Agglomeration bewerkstelligt werden.

In einigen Fällen haben sich auch Mischungen aus mehreren Acrylester-Polymerisaten bewährt, die unterschiedliche Teilchengrößen aufweisen. Entsprechende Produkte sind in DE-A 28 26 925 und US 5,196,480 beschrieben, auf die hier wegen näherer Details verwiesen wird.

Demzufolge werden als bevorzugte Mischungen von Acrylesterpolymerisaten solche eingesetzt, in denen ein erstes Polymer eine Teilchengröße d₅₀ im Bereich von 50 bis 150 nm und ein zweites Polymer eine Teilchengröße von 200 bis 700 nm aufweist, wie sie in der bereits erwähnten US 5,196,480 beschrieben werden.

Gemäß einer weiteren bevorzugten Verwendung werden als Pfropfgrundlage (a₁) Mischungen aus Polymeren (a₁₁) (wie sie in DE-A 11 64 080, DE-C 19 11 882 und DE-A 31 49 358 beschrieben werden) und Polymeren (a₁₂) eingesetzt, wobei die Polymeren (a₁₂) im allgemeinen eine mittlere Teilchengröße im Bereich von 30 bis 1000, vorzugsweise von 100 bis 900 nm aufweisen.

Als Komponente (B) enthalten die erfindungsgemäßen Formmassen 1 bis 90, vorzugsweise 5 bis 85 Gew.-%, besonders bevorzugt 10 bis 80 Gew.-%, bezogen auf das Gesamtgewicht der Formmasse, eines Copolymerisats aus
(b₁) 50 bis 99, vorzugsweise 55 bis 90 und insbesondere 65 bis 85 Gew.-%, bezogen auf (B), vinylaromatischen Monomeren, vorzugsweise Styrol und/oder substituierten Styrolen der allgemeinen Formel I
   und
(b₂) 1 bis 50, vorzugsweise 10 bis 45 und insbesondere 15 bis 35 Gew.-%, bezogen auf (B), der für (a₂₂) beschriebenen Monomere.

Der Anteil der Komponenten (b₁) und (b₂) an der Komponente (B) beträgt gemäß der zweiten erfindungsgemäßen Ausführungsform:
(b₁) 69 bis 81, vorzugsweise 70 bis 78 und insbesondere 70 bis 77 Gew.-%, bezogen auf (B), der oben genannten vinylaromatischen Monomerer, und
(b₂) 19 bis 31, vorzugsweise 22 bis 30 Gew.-%, besonders bevorzugt 23 bis 30 Gew.-%, bezogen auf (B), der für (a₂₂) beschriebenen Monomere, wobei als Komponente (b₂) besonders bevorzugt Acrylnitril eingesetzt wird.

Derartige Produkte können z.B. nach dem in den DE-A 10 01 001 und DE-A 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 40.000 bis 500.000, insbesondere von 100.000 bis 250.000, was Viskositätszahlen im Bereich von 40 bis 200, vorzugsweise von 40 bis 160 ml/g, entspricht (gemessen in 0,5 gew.-%iger Lösung in Dimethylformamid bei 25°C).

Das Polymere (B) kann auch eine Mischung verschiedener Copolymere von Styrol bzw. α-Methylstyrol und Acrylnitril sein, die sich beispielsweise im Gehalt an Acrylnitril oder in der mittleren Molmasse unterscheiden.

Der Anteil der Komponente (C) an den Formmassen beträgt, bezogen auf die Summe der Komponenten (A), (B), (C) und gegebenenfalls (D) und (E), 1 bis 70, bevorzugt 1 bis 50 und besonders bevorzugt 1 bis 40 Gew.-%.

Der Anteil der Komponente (C) an den Formmassen gemäß der zweiten erfindungsgemäßen Ausführungsform beträgt, bezogen auf die Summe der Komponenten (A), (B), (C) und gegebenenfalls (D und (E)), 0,1 bis 70, bevorzugt 0,1 bis 50 und besonders bevorzugt 0,1 bis 40 Gew.-%. Ganz besonders bevorzugt beträgt der Anteil der Komponente (C) 0,1 bis 15, insbesondere 0,5 bis 15 und ganz besonders 1 bis 15 Gew.-%.

Komponente (C) ist ein kautschukelastisches Blockcopolymerisat aus
mindestens einem einpolymerisierte Einheiten aus vinylaromatischen Monomeren aufweisenden, eine Hartphase bildenden Block C_{A} und
mindestens einem einpolymerisierte Einheiten aus vinylaromatischen Monomeren sowie einem Dien aufweisenden elastomeren, eine Weichphase bildenden Block C_{B/A,} wobei
die Glasübergangstemperatur T_{g} des Blocks C_{A} über 25°C, bevorzugt über 50°C, und die des Blocks C_{B/A} unter 25°C, bevorzugt unter 5°C, liegt und
das Phasenvolumen-Verhältnis von Block C_{A} zu Block C_{B/A} so gewählt ist, daß der Anteil der Hartphase am gesamten Blockcopolymerisat 1 bis 40 Vol.-% und der Gewichtsanteil des Diens weniger als 50 Gew.-% beträgt, wobei
der relative Anteil an 1,2-Verknüpfungen des Polydiens, bezogen auf die Summe an 1,2-und 1,4-cis/trans-Verknüpfungen unterhalb von etwa 15%, bevorzugt unterhalb von 12%, liegt.

Detaillierte Angaben zum Aufbau und zur Herstellung der Komponente C sind in DE-A 19 615 533 offenbart, auf die hier verwiesen wird.

Bevorzugt als vinylaromatische Verbindungen sind Styrol und ferner α-Methylstyrol, 1,1-Diphenylethylen und Vinyltoluol sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol.

Alle nachstehenden Gewichts- und Volumenangaben beziehen sich auf diese Kombination; bei Verwendung der technischen Äquivalente von Styrol und Butadien muß man gegebenenfalls die Angaben entsprechend umrechnen.

Der C_{B/A}-Block wird z.B. aus 75-30 Gew.-% Styrol und 25-70 Gew.-% Butadien aufgebaut. Besonders bevorzugt hat ein Weichblock einen Butadienanteil zwischen 35 und 70% und einen Styrolanteil zwischen 65 und 30%.

Der Gewichtsanteil des Diens im gesamten Blockcopolymer liegt im Falle der Monomerkombination Styrol/Butadien bei 15-65 Gew.-%, derjenige der vinylaromatischen Komponente entsprechend bei 85-35 Gew.-%. Besonders bevorzugt sind Butadien-Styrol-Blockcopolymere mit einer Monomerzusammensetzung aus 25-60 Gew.-% Dien und 75-40 Gew.-% an vinylaromatischer Verbindung.

Ein Blockcopolymerisat C kann z.B. durch eine der allgemeinen Formeln 1 bis 11 dargestellt werden:

(1) (C_{A-}C_{(B/A)})ₙ;

(2) (C_{A-}C_{(B/A)})ₙ-C_{A};

(3) C_{(B/A)}-(C_{A}.C_{(B/A)})ₙ;

(4) X-[(C_{A-}C_{(B/A)})ₙ]ₘ₊₁;

(5) X-[(C(_{B/A})-C_{A})ₙ]ₘ₊₁;

(6) X-[(C_{A-}C_{(B/A)})ₙ-C_{A}]ₘ₊₁;

(7) X-[(C_{(B/A)}-C_{A})ₙ-C_{(B/A)}]ₘ₊₁;

(8) Y-[(C_{A-}C_{(B/A)})ₙ]ₘ₊₁;

(9) Y-[(C_{(B/A)}-C_{A})ₙ]ₘ₊₁;

(10) Y-[(C_{A-}C_{(B/A)})ₙ-C_{A}]ₘ₊₁;

(11) Y-[(C_{(B/A)}-C_{A})ₙ-C_{(B/A)}]ₘ₊₁;

wobei C_{A} für den vinylaromatischen Block und C_{(B/A)} für die Weichphase, also den statistisch aus Dien- und vinylaromatischen Einheiten aufgebauten Block steht, X den Rest eines n-funktionellen Initiators, Y den Rest eines m-funktionellen Kopplungsmittels und m und n natürliche Zahlen von 1 bis 10 bedeuten.

Bevorzugt sind Blockcopolymerisate einer der allgemeinen Formeln C_{A}-C_{(B/A)}-C_{A}, X-[-C_{(B/A)}-C_{A}]₂ und Y-[-C_{(B/A)}-C_{A}]₂ (Bedeutung der Abkürzungen wie vorstehend) und besonders bevorzugt ist ein Blockcopolymerisat, dessen Weichphase unterteilt ist in Blöcke

(12) C_{(B/A)1}-C_{(B/A)2};

(13) C_{(B/A)1}-C_{(B/A)2}-C_{(B/A)1};

(14) C_{(B/A)1}-C_{(B/A)2}-C_{(B/A)3};

wobei die Blöcke unterschiedlich aufgebaut sind bzw. sich deren Vinylaromat/Dien-Verhältnis in den einzelnen Blöcken C_{(B/A)} derart ändert, daß in jedem Teilabschnitt (Teilblock) ein Zusammensetzungsgradient C_{(B/A)p1} << C_{(B/A)p2} << C_{(B/A)p3 .......} vorkommt, wobei die Glasübergangstemperatur T_{g} jedes Teilblocks unter 25°C liegt. Solche Blockcopolymerisate, die innerhalb eines Blocks C_{(B/A)} z.B. p sich wiederholende Abschnitte (Teilblöcke) mit wechselndem Monomeraufbau aufweisen, können durch p-portionsweise Zugabe der Monomeren gebildet werden, wobei p eine ganze Zahl zwischen 2 und 10 bedeutet. Die portionsweise Zugabe kann z.B. dazu dienen, den Wärmehaushalt im Reaktionsgemisch zu kontrollieren.

Ein Blockcopolymerisat, das mehrere Blöcke C(_{B/A}) und/oder C_{A} mit jeweils unterschiedlicher Molmasse je Molekül aufweist, ist ebenfalls bevorzugt.

Ebenso kann an die Stelle eines ausschließlich aus vinylaromatischen Einheiten aufgebauten Blocks C_{A} ein Block C_{B} treten, da es insgesamt lediglich darauf ankommt, daß ein kautschukelastisches Blockcopolymerisat gebildet wird. Solche Copolymerisate können z.B. die Struktur (15) bis (18) haben

(15) C_{B}-C_{(B/A)}

(16) C_{(B/A)}-C_{B}-C_{(B/A)}

(17) C_{(B/A)1}-C_{B}-C_{(B/A)2}

(18) C_{B}[C_{(B/A)1}-C_{(B/A)2}]

Die Blockpolymere werden durch anionische Polymerisation in einem unpolaren Lösungsmittel hergestellt, wobei die Initiierung mittels metallorganischer Verbindungen erfolgt. Bevorzugt sind Verbindungen der Alkalimetalle, besonders des Lithiums. Beispiele für Initiatoren sind Methyllithium, Ethyllithium, Propyllithium, n-Butyllithium, sek. Butyllithium und tert. Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymeren, liegt aber in der Regel im Bereich von 0,002 bis 5 Mol-%, wenn man sie auf die Monomeren bezieht. Als Lösungsmittel werden bevorzugt aliphatische Kohlenwasserstoffe wie Cyclohexan oder Methylcyclohexan verwendet.

Die statistischen, gleichzeitig Vinylaromat und Dien enthaltenden Blöcke der Blockcopolymeren werden unter Zusatz eines löslichen Kaliumsalzes, insbesondere eines Kaliumalkoholates, hergestellt.

Es besteht dabei die Vorstellung, daß das Kaliumsalz mit dem Lithium-Carbanion-Ionenpaar einen Metallaustausch eingeht, wobei sich Kalium-Carbanionen bilden, die bevorzugt Styrol anlagern, während Lithium-Cabanionen bevorzugt Butadien addieren. Weil Kalium-Carbanionen wesentlich reaktiver sind, genügt schon ein kleiner Bruchteil, nämlich 1/10 bis 1/40, um zusammen mit den überwiegenden Lithium-Carbanionen im Mittel den Einbau von Styrol und Butadien gleich wahrscheinlich zu machen. Ferner besteht die Vorstellung, daß es während des Polymerisationsvorgangs häufig zu einem Metallaustausch zwischen den lebenden Ketten sowie zwischen einer lebenden Kette und dem gelösten Salz kommt, so daß dieselbe Kette einmal bevorzugt Styrol und dann wieder Butadien addiert. Im Ergebnis sind die Copolymerisationsparameter dann für Styrol und Butadien annähernd gleich.

Als Kaliumsalze eignen sich vor allem Kaliumalkoholate, hier insbesondere tertiäre Alkoholate mit mindestens 7 Kohlenstoffatomen. Typische korrespondierende Alkohole sind z.B. 3-Ethyl-3-pentanol und 2,3-Dimethyl-3-pentanol. Als besonders geeignet erwies sich Tetrahydrolinalool (3,7-Dimethyl-3-oktanol). Grundsätzlich geeignet sind neben den Kaliumalkoholaten auch andere Kaliumsalze, die sich gegenüber Metallalkylen inert verhalten. Zu nennen sind hier Dialkylkaliumamide, alkylierte Diarylkaliumamide, Alkylthiolate und alkylierte Arylthiolate.

Wichtig ist der Zeitpunkt, zu dem das Kaliumsalz dem Reaktionsmedium zugegeben wird. Üblicherweise werden zumindest Teile des Lösungsmittels und das Monomer für den ersten Block im Reaktionsgefäß vorgelegt. Es empfiehlt sich nicht, zu diesem Zeitpunkt das Kaliumsalz zuzugeben, da es durch Spuren an protischen Verunreinigungen zumindest teilweise zu KOH und Alkohol hydrolysiert wird. Die Kaliumionen sind dann irreversibel für die Polymerisation desaktiviert. Daher sollte zuerst das Lithiumorganyl zugegeben und eingemischt werden, dann erst das Kaliumsalz. Ist der erste Block ein Homopolymerisat, empfiehlt es sich, das Kaliumsalz erst kurz vor der Polymerisation des statistischen Blocks hinzuzufügen.

Das Kaliumalkoholat kann aus dem entsprechenden Alkohol leicht durch Rühren einer Cyclohexanlösung in Gegenwart von überschüssiger Kalium-Natrium-Legierung hergestellt werden. Nach 24 Stunden bei 25°C ist die Wasserstoffentwicklung und damit die Umsetzung beendet. Die Umsetzung kann aber auch durch Refluxieren bei 80°C auf wenige Stunden verkürzt werden. Als alternative Umsetzung bietet sich an, den Alkohol mit einem geringen Überschuß an Kaliummethylat, Kaliumethylat oder Kaliumtertiärbutylat in Gegenwart eines hochsiedenden inerten Lösungsmittels wie Dekalin oder Ethylbenzol zu versetzen, den niedersiedenden Alkohol, hier Methanol, Ethanol oder Tertiärbutanol abzudestillieren, den Rückstand mit Cyclohexan zu verdünnen und von überschüssigem schwerlöslichem Alkoholat abzufiltrieren.

Der Anteil an 1,2-Verknüpfungen im Verhältnis zur Summe aus 1,2- und 1,4-Verknüpfungen des Diens erreicht durch den Zusatz der Kaliumverbindung i.a. zwischen 11 und 9 %. Demgegenüber erreicht der Anteil an 1,2- bzw 1,4-Verknüpfungen der Dieneinheiten bei Verwendung einer Lewis-Base nach DE-A 44 20 952 z.B. einen Wert von 15-40 % für die 1,2- und 85-60 % für die 1,4-Verknüpfungen, jeweils bezogen auf die Gesamtmenge an einpolymerisierten Dieneinheiten.

Die Polymerisationstemperatur kann zwischen 0 und 130°C betragen. Bevorzugt wird der Temperaturbereich zwischen 30 und 100°C.

Der Volumenanteil der aus Dien- und vinylaromatischen Sequenzen aufgebauten Weichphase liegt bei 60 bis 95, bevorzugt bei 70 bis 90 und besonders bevorzugt bei 80 bis 90 Vol.-%. Die aus den vinylaromatischen Monomeren entstandenen Blöcke C_{A} bilden die Hartphase, deren Volumenanteil entsprechend 5 bis 40, bevorzugt 10 bis 30 und besonders bevorzugt 10 bis 20 Vol-% ausmacht.

Es ist darauf hinzuweisen, daß zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymeren läßt sich auch aus den eingesetzten Monomermengen berechnen, wenn man jedesmal vollständig auspolymerisieren läßt.

Eindeutig definiert wird das Blockcopolymere durch den Quotienten aus dem Volumenanteil in Prozent der aus den C_{(B/A)}-Blöcken gebildeten Weichphase und dem Anteil an Dieneinheiten in der Weichphase, der für die Kombination Styrol/Butadien zwischen 25 und 70 Gew.% liegt.

Durch den statischen Einbau der vinylaromatischen Verbindungen in den Weichblock des Blockcopolymeren und die Verwendung von Kaliumalkoholaten während der Polymerisation wird die Glasübergangstemperatur (T_{g}) beeinflußt. Eine Glasübergangstemperatur zwischen -50 und +25°C, bevorzugt -50 bis +5°C ist typisch. Bei den erfindungsgemäßen kaliumkatalysierten statistischen Copolymeren liegt die Glasübergangstemperatur im Schnitt um 2 bis 5°C niedriger als bei den entsprechenden Lewis-Basekatalysierten Produkten, weil letztere einen erhöhten Anteil an 1,2-Butadien-Verknüpfungen aufweisen. 1,2-Polybutadien hat eine um 70-90°C höhere Glasübergangstemperatur als 1,4-Polybutadien.

Das Molekulargewicht des Blocks C_{A} liegt dabei i.a. zwischen 1000 und 200 000, bevorzugt zwischen 3 000 und 80 000 [g/mol]. Innerhalb eines Moleküls können C_{A}-Blöcke unterschiedliche Molmasse haben.

Das Molekulargewicht des Blocks C(_{B/A}) liegt üblicherweise zwischen 2 000 und 250 000 [g/mol], bevorzugt werden Werte zwischen 5 000 und 150 000 [g/mol].

Auch ein Block C(_{B/A}) kann ebenso wie ein Block C_{A} innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kopplungsmittel gebildet. Beispiele für derartige Verbindungen sind in den US 3,985,830, US 3,280,084, US 3,637,554 und US 4,091,053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat oder Ethylbenzoat geeignet.

Bevorzugte Polymerstrukturen sind C_{A}-C_{(B/A)}-C_{A}; X-[-C_{(B/A)}-C_{A]2} und Y-[-C_{(B/A)}-C_{A]2}, wobei der statistische Block C_{(B/A)} selbst wieder in Blöcke C_{(B1/A1)}-C_{(B2/A2)}-C_{(B3/A3)}-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks C_{(B/A)} in möglichst viele Teilblöcke C_{Bn/An} bietet den entscheidenden Vorteil, daß sich auch bei einer sich kontinuierlich ändernden Zusammensetzung (einem Gradienten) innerhalb eines Teilblocks C_{Bn/An}, wie er sich in der anionischen Polymerisation unter praktischen Bedingungen nur schwer vermeiden läßt (s.u.), der C_{(B/A)}-Block insgesamt wie ein nahezu perfektes statistisches Polymer verhält. Es bietet sich deshalb an, weniger als die theoretische Menge an Kaliumalkoholat zuzusetzen. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden C_{(B/A)}-Blöcke eine Restzähigkeit behält und nicht vollständig versprödet.

Die erfindungsgemäßen Blockcopolymere besitzen ein dem Weich-PVC sehr ähnliches Eigenschaftsspektrum, können jedoch vollkommen frei von migrationsfähigen, niedermolekularen Weichmachern hergestellt werden. Sie sind unter den üblichen Verarbeitungsbedingungen (180 bis 220°C) gegen Vernetzung stabil. Die hervorragende Stabilität der erfindungsgemäßen Polymerisate gegen Vernetzung kann mittels Rheographie eindeutig belegt werden. Die Versuchsanordnung entspricht derjenigen der MVR-Messung. Bei konstanter Schmelzflußrate wird der Druckanstieg in Abhängigkeit von der Zeit aufgezeichnet. Die erfindungsgemäßen Polymere zeigen selbst nach 20 Minuten bei 250°C keinen Druckanstieg und ergeben einen glatten Schmelzestrang, während sich bei einer nach der DE-A 44 20 952 mit Tetrahydrofuran hergestellten Vergleichsprobe unter den gleichen Bedingungen der Druck verdreifacht und der Strang ein für die Vernetzung typisches stacheldrahtähnliches Aussehen annimmt.

Die Polymerisation wird mehrstufig durchgeführt und bei monofunktioneller Initiierung z.B. mit der Herstellung des Hartblocks C_{A} begonnen. Ein Teil der Monomeren wird im Reaktor vorgelegt und die Polymerisation durch Zugabe des Initiators gestartet. Um einen definierten, aus der Monomer- und Initiatordosierung berechenbaren Kettenaufbau zu erzielen, ist es empfehlenswert, den Prozeß bis zu einem hohen Umsatz (über 99%) zu führen, bevor die zweite Monomerzugabe erfolgt. Zwingend erforderlich ist dies jedoch nicht.

Die Abfolge der Monomerzugabe richtet sich nach dem gewählten Blockaufbau. Bei monofunktioneller Initiierung wird z.B. zuerst die vinylaromatische Verbindung entweder vorgelegt oder direkt zudosiert. Anschließend wird eine Cyclohexanlösung des Kaliumalkoholats zugegeben. Danach sollten Dien und Vinylaromat möglichst gleichzeitig zugegeben werden. Die Zugabe kann in mehreren Portionen geschehen. Durch das Mengenverhältnis von Dien zu vinylaromatischer Verbindung, die Konzentration des Kaliumsalzes sowie die Temperatur wird der statistische Aufbau und die Zusammensetzung des Blocks C_{(B/A)} bestimmt. Das Dien nimmt relativ zur Gesamtmasse einschließlich vinylaromatischer Verbindung einen Gewichtsanteil von 25% bis 70% ein. Anschließend kann Block C_{A} durch Zugabe des Vinylaromaten anpolymerisiert werden. Stattdessen können benötigte Polymerblöcke auch durch eine Kopplungsreaktion miteinander verbunden werden. Im Falle der bifunktionellen Initiierung wird zuerst der C_{(B/A)}-Block aufgebaut, gefolgt vom C_{A}-Block.

Die weitere Aufarbeitung erfolgt nach den üblichen Verfahren. Es empfiehlt sich, dabei in einem Rührkessel zu arbeiten und mit einem Alkohol wie Isopropanol die Polymerisation abzubrechen, vor der weiteren Aufarbeitung in üblicher Weise mit CO₂/Wasser schwach sauer zu stellen, das Polymer mit einem Oxidationsinhibitor und einem Radikalfänger (handelsübliche Produkte wie Trisnonylphenylphosphit (TNPP) oder α-Tocopherol (Vitamin E) bzw. unter dem Handelsnamen Irganox 1076 oder Irganox 3052 erhältliche Produkte) zu stabilisieren, das Lösungsmittel nach den üblichen Verfahren zu entfernen, zu extrudieren und zu granulieren.

Als Komponente (D) können die erfindungsgemäßen thermoplastischen Formmassen 0 bis 300 Gew.-%, bezogen auf die Summe von (A), (B) und (C) vorzugsweise 0 bis 200 Gew.-%, mindestens eines Polycarbonats enthalten.

Geeignete Polycarbonate sind beispielsweise solche auf Basis von Diphenolen der allgemeinen Formel II 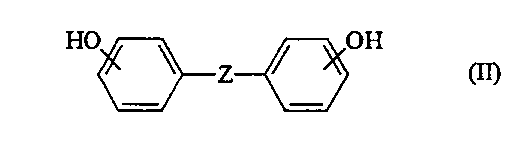 worin Z eine Einfachbindung, eine C₁- bis C₃-Alkylen-, eine C₂- bis C₃-Alkyliden-, eine C₃- bis C₆-Cycloalkylidengruppe, sowie -S- oder -SO₂- bedeutet.

Bevorzugte Diphenole der Formel II sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan.

Sowohl Homopolycarbonate als auch Copolycarbonate sind als Komponente (D) geeignet, bevorzugt sind neben dem Bisphenol A-Homopolymerisat die Copolycarbonate von Bisphenol A.

Die geeigneten Polycarbonate können in bekannter Weise verzweigt sein, vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Weiterhin können die als Komponente (D) geeigneten Polycarbonate an den aromatischen Einheiten ein- bis dreifach mit Halogenatomen, bevorzugt mit Chlor und/oder Brom, substituiert sein. Besonders bevorzugt sind jedoch halogenfreie Verbindungen.

Als besonders geeignet haben sich Polycarbonate erwiesen, die relative Viskositäten hᵣₑₗ, von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000.

Die Diphenole der allgemeinen Formel II sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach einem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-A 33 34 782).

Geeignete Kettenabbrecher sind beispielsweise Phenol, p-tert.-Butylphenol aber auch langkettige Alkylphenole wie 4-(1,3-Tetramethyl-butyl)-phenol, gemäß DE-A 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenyl, 3,5-di-tert.-Butylphenol, p-tert.-Octylphenol, p-Dodecylphenol, 2-(3,5-Dimethyl-heptyl)-phenol und 4-(3,5-Dimethylheptyl)-phenol.

Weitere geeignete Polycarbonate sind solche auf Basis von Hydrochinon oder Resorcin.

Außer den Komponenten (A), (B), (C) und (D) können die thermoplastischen Formmassen noch übliche Zusatzstoffe und Verarbeitungshilfsmittel als Komponente E) in einer Menge von 0 bis 30 Gew.-%, bezogen auf das Gesamtgewicht der Formmassen, enthalten. Solche Zusatzstoffe und Verarbeitungshilfsmittel sind Gleit- und Entformungsmittel, Pigmente, Farbstoffe, Flammschutzmittel, Antioxidantien, Stabilisatoren gegen Lichteinwirkung, faser- und pulverförmige Füll- und Verstärkungsmittel und Antistatika in den für diese Mittel üblichen Mengen.

Die Herstellung der erfindungsgemäßen Formmassen kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch ohne Schmelzen "kalt" vermischt werden und das pulvrige oder aus Granulaten bestehende Gemisch wird erst bei der Verarbeitung aufgeschmolzen und homogenisiert.

Ein weiterer Gegenstand der vorliegenden Erfindung ist daher ein Verfahren zur Herstellung der erfindungsgemäßen thermoplastischen Formmassen durch Mischen der Komponenten nach an sich bekannten Mischverfahren.

Aus den Formmassen lassen sich Formkörper aller Art, insbesondere Folien und Flächengebilde, herstellen. Die Herstellung der Folien kann durch Extrudieren, Walzen, Kalandrieren und andere dem Fachmann bekannte Verfahren erfolgen. Die erfindungsgemäßen Formmassen werden dabei durch Erwärmen und/oder Friktion allein oder unter Mitverwendung von weichmachenden oder anderen Zusatzstoffen zu einer verarbeitungsfähigen Folie oder einem Flächengebilde (Platte) geformt. Die Verarbeitung zu dreidimensionalen Formkörpern aller Art erfolgt beispielsweise durch Spritzguß.

Ein weiterer Gegenstand der vorliegenden Erfindung ist somit die Verwendung der erfindungsgemäßen thermoplastischen Formmassen zur Herstellung von Formkörpern, Folien und Fasern. Des weiteren sind die durch Verwendung der thermoplastischen Formmassen erhältlichen Formkörper Gegenstand der vorliegenden Erfindung.

Die erfindungsgemäßen thermoplastischen Formmassen weisen gegenüber vergleichbaren Formmassen eine bessere Fließfähigkeit bei gleichzeitig verbesserter Entformbarkeit, Tiefziehfestigkeit und nicht verschlechterter Farbhaftung auf und sind weitgehend frei von ausdünstenden und ausschwitzenden Bestandteilen.

Sie weisen, für den Fall, daß (A) ein Butadien-Kautschuk ist, eine hervorragende Durchstoßfestigkeit und Kerbschlagzähigkeit auf. Für den Fall, daß (A) ein Acrylat-Kautschuk ist, ist insbesondere die sehr gute Schlagzähigkeit hervorzuheben.

Sie eignen sich zur Herstellung von Folien, Formkörpern (besonders Platten) und Fasern, die durch Thermoformen und Tiefziehen hervorragend weiterverarbeitet werden können, ebenso wie zur Herstellung von Spritzgußteilen, insbesonders für schnelle Verarbeitung mit kurzen Taktzeiten.

Die erfindungsgemäßen Formmassen eignen sich für den Einsatz in Elektrogeräten wie Küchenmaschinen, Rasierapparaten, Telefonen, Staubsaugern, Monitorgehäusen, Tastaturen, Elektro-Rasenmähern, Spielzeugeisenbahnen, Waschmaschinen, Geschirrspülmaschinen und Kühlschränken.

Des weiteren sind die erfindungsgemäßen Formmassen zur Herstellung von Automobilteilen geeignet. Beispielsweise können sie im Automobilinnenraum eingesetzt werden, in Mittelkonsolen, Türseitenverkleidungen, Tachogehäusen, Lüfterdüsen, Knöpfen und Schaltern. Sie sind auch für den Außeneinsatz im Automobil geeignet, beispielsweise für Radkappen, Außenspiegel (eingefärbt, lackiert oder galvanisiert), galvanisierte Embleme, Kühlergrill und Spoiler.

Weiterhin sind die erfindungsgemäßen Formmassen für Spielzeug, Profilextrusion, Rohrextrusion, Plattenextrusion, 2-Schicht- und Mehrschichtextrusion und Gehäuseteile geeignet.

### Beispiele

Es wurden folgende Bestandteile hergestellt (alle %-Angaben sind Gew.-%)

### A: Herstellung der Komponenten A:

Die bei der Beschreibung der Komponente (A) erwähnte mittlere Teilchengröße ist das Gewichtsmittel der Teilchengrößen.

Der mittlere Durchmesser entspricht dem d₅₀-Wert, demzufolge 50 Gew.-% aller Teilchen einen kleineren und 50 Gew.-% einen größeren Durchmesser haben als derjenige Durchmesser, der dem d₅₀-Wert entspricht. Um die Breite der Teilchengrößenverteilung zu charakterisieren, werden zusätzlich zum d₅₀-Wert oftmals der d₁₀- sowie der d₉₀-Wert angegeben. 10 Gew.-% aller Teilchen sind kleiner und 90 Gew.-% größer als der d₁₀-Durchmesser. Analog haben 90 Gew.-% aller Teilchen einen kleineren und 10 Gew.-% einen größeren Durchmesser als denjenigen, der dem d₉₀-Wert entspricht. Der Quotient Q = (d₉₀-d₁₀)/d₅₀ ist ein Maß für die Breite der Teilchengrößenverteilung. Je kleiner Q ist, desto enger ist die Verteilung.

### A1: Herstellung einer Komponente A-I:

### A) Herstellung einer Pfropfgrundlage A-I-1:

Die Herstellung der jeweiligen Pfropfgrundlage auf Acrylesterbasis ((a₁₁₁) + (a₁₁₂)) erfolgte nach folgender allgemeiner Vorschrift:

160 g eines Gemisches aus 98 % Butylacrylat und 2 % Dihydrodicyclopentadienylacrylat (DCPA) wurden in 1500 g Wasser unter Zusatz von 5 g des Natriumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 840 g Butylacrylat zugegeben. Nach Beendigung der Monomerzugabe wurde die Emulsion noch eine Stunde bei 60°C gehalten.

### b) Herstellung eines teilchenförmigen Pfropfpolymerisats A-I:

2100 g der nach Vorschrift a) hergestellten Emulsion wurden mit 1150 g Wasser und 2,7 g Kaliumperoxodisulfat gemischt und unter Rühren auf 65°C erwärmt. Nach Erreichen der Reaktionstemperatur wurden im Lauf von 3 Stunden 560 g Styrol/Acrylnitril im Verhältnis 75:25 zugefügt. Nach Beendigung der Zugabe wurde die Emulsion noch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.

### A2: Herstellung einer Komponente A-II:

### a) Herstellung einer Pfropfgrundlage A-II-1

Die Herstellung der jeweiligen Pfropfgrundlage auf Butadienbasis (a₁₂₁ + a₁₂₂) erfolgte nach folgender Vorschrift:

Durch Polymerisation von 600 g Butadien in Gegenwart von 6 g tert.-Dodecylmercaptan, 7 g C₁₄-Na-Alkylsulfonat als Emulgator, 2 g Kaliumperoxodisulfat und 2 g Natriumpyrophosphat in 800 ml Wasser wird bei 65°C ein Polybutadienlatex hergestellt. Der Umsatz beträgt 98 %. Es wird ein Latex erhalten, dessen mittlere Teilchengröße bei 100 nm liegt. Der erhaltene Latex wird durch Zusatz von 25 g einer Emulsion eines Copolymeren aus 96 Teilen Ethylacrylat und 4 Teilen Methacrylsäureamid mit einem Feststoffgehalt von 10 Gew.-% agglomeriert, wobei ein Polybutadienlatex mit einer mittleren Teilchengröße von 350 nm entsteht.

### b) Herstellung eines teilchenförmigen Pfropfpolymerisats A-II:

Nach Zusetzen von 400 g Wasser, 4 g Na-C₁₄-Alkylsulfonat und 2 g Kaliumperoxodisulfat zu der nach Vorschrift a hergestellten Pfropfgrundlage werden 400 g einer Mischung aus Styrol und Acrylnitril (3 : 1) innerhalb von 4 Stunden zugeführt. Die Polymerisation erfolgt unter Rühren des Ansatzes bei 75°C. Der Umsatz, bezogen auf Styrol-Acrylnitril ist praktisch quantitativ. Die erhaltene Pfropfkautschukdispersion wird mittels Magnesiumsulfatlösung gefällt und das abgetrennte Pfropfmischpolymerisat mit destilliertem Wasser gewaschen und getrocknet.

### A3: Herstellung einer Komponente A-III:

### a) Herstellung einer Pfropfgrundlage A-III-1

4312 g Butadien werden in Gegenwart von 43 g tert.-Dodecylmercaptan, 31,1 g Kaliumsalz von C₁₂- bis C₂₀-Fettsäuren, 8,2 g Kaliumpersulfat, 14,7 g Natriumhydrogencarbonat und 5840 g Wasser bei 65°C zu einem Polybutadienlatex polymerisiert. Es wird verfahren wie in EP-A 0 062 901 beschrieben. Der Umsatz beträgt 96%, die mittlere Teilchengröße 80 bis 120 nm.

Zur Agglomeration des Latex werden 3500 g der so erhaltenen Dispersion bei 65°C mit 287 g einer Dispersion (Feststoffgehalt 10 Gew.-%) aus 96 Gew.-% Ethylacrylat und 4 Gew.-% Methacrylamid versetzt.

### Herstellung eines teilchenförmigen Pfropfpolymerisats A-III:

Dem so agglomerierten Latex werden 930 g Wasser, 13 g Kaliumsalz von C₁₂- bis C₂₀-Fettsäuren und 1,7 g Kaliumperoxodisulfat zugefügt. Anschließend werden 897 g einer Mischung von Styrol und Acrylnitril (80 : 20 Gew.-%) innerhalb von 4 Stunden hinzugefügt. Die erhaltene Pfropfdispersion weist einen d₅₀-Wert der Teilchengrößenverteilung von 150 bis 350 nm auf.

### A4: Herstellung der Komponente A-IV

### a) Herstellung einer Pfropfgrundlage A-IV-1

4 Teile Vinylmethylether, 15 Teile Acrylsäurebutylester und 15 Teile Butadien werden in 150 Teilen Wasser unter Zusatz von 1,2 Teilen des Natriumsalzes einer Paraffinsulfonsäure (C₁₂-C₁₈), 0,3 Teilen Kaliumpersulfat, 0,3 Teilen Natrium-bicarbonat und 0,15 Teilen Natriumpyrophosphat unter Rühren auf 65°C erwärmt. Nach Anspringen der Polymerisation gibt man eine Mischung aus 43 Teilen Acrylsäurebutylester und 23 Teilen Butadien innerhalb von 5 h dazu. Nachdem alle Monomeren zugegeben sind, wird der Polymerisationsansatz noch 2 Stunden auf 65°C gehalten. Man erhält eine ca. 40%ige wäßrige Dispersion.

### b) Herstellung eines teilchenförmigen Pfropfpolymerisats A-IV

250 Teile der Grundstufendispersion (Pfropfgrundlage) (A IV-1) werden mit 60 Teilen einer Mischung aus Styrol und Acrylnitril und so viel Wasser versetzt, daß sich eine 40 %ige Dispersion bildet und unter Rühren bei 70°C polymerisiert.

Als Polymerisationsinitiator werden 0,2 % Kaliumpersulfat und 0,3 % Lauroylperoxid - jeweils bezogen auf die Monomeren - zugesetzt und im Gemisch der Monomeren gelöst.

### B: Herstellung der Komponente B:

Die Herstellung der Komponente B erfolgte nach dem Verfahren der kontinuierlichen Lösungspolymerisation, wie es im Kunststoff-Handbuch, Hrsg. R. Vieweg und G. Daumiller, Bd V "Polystyrol", Carl-Hanser-Verlag, München 1969, Seite 122 bis 124, beschrieben ist.

### B1: Komponente B-I:

Ein Copolymer aus Styrol und Acrylnitril mit 35 Gew.-%, Acrylnitril (AN) und einer Viskositätszahl von 60 ml/g, gemessen als 0,5 %ige Lösung in Dimethylformamid gemäß DIN 53726.

### B2: Komponente B-II:

Ein Copolymer aus Styrol und Acrylnitril mit 25 Gew.-%, Acrylnitril und einer Viskositätszahl von 64 ml/g, gemessen als 0,5 %ige Lösung in Dimethylformamid gemäß DIN 53726.

### B3: Komponente B-III:

Wie Komponente B 2, jedoch mit einer Viskositätszahl von 80 ml/g, gemessen als 0,5%ige Lösung in Dimethylformamid gemäß DIN 53726.

### B4: Komponente B-IV:

Wie B1, aber mit einer Viskositätszahl von 80 ml/g, gemessen als 0,5%ige Lösung in Dimethylformamid gemäß DIN 53726.

### C: Herstellung der Komponente C:

Zur Herstellung der Komponente C wurde ein simultan heiz- und kühlbarer 50 Liter-Edelstahlautoklav, der mit einem Kreuzbalkenrührer ausgerüstet war, durch Spülen mit Stickstoff, Auskochen mit einer Lösung von sec-Butyllithium und 1,1-Diphenylethylen im Molverhältnis 1: 1 in Cyclohexan und Trocknen vorbereitet.

Dann wurden 22,81 Cyclohexan eingefüllt und die in Tabelle 1 angegebenen Mengen an Initiator, Monomeren und Kaliumalkoholat zugesetzt. Angegeben ist auch die Polymerisationsdauer, Anfangs- und Endtemperatur T_{A} bzw. T_{E}, wobei die Monomerzulaufdauer stets klein gegen die Polymerisationsdauer war.

Die Temperatur des Reaktionsgemisches wurde durch Heizung oder Kühlung des Reaktormantels gesteuert. Nach Umsetzungsende (Verbrauch der Monomeren) wurde mit Ethylformiat bis zur Farblosigkeit titriert und die Mischung mit einem 1,5-fachen Überschuß an Ameisensäure sauer gestellt. Zuletzt wurden 34 g eines handelsüblichen Stabilisators (® Irganox 3052; Ciba-Geigy/Basel) und 82 g Trisnonylphenylphosphit zugesetzt.

Die Lösung wurde auf einem Entgasungsextruder (drei Dome, Vorwärts- und Rückwärtsentgasung) bei 200°C aufgearbeitet. Das auf diese Weise erhaltene Granulat wurde zur Herstellung der Formmasse verwendet.

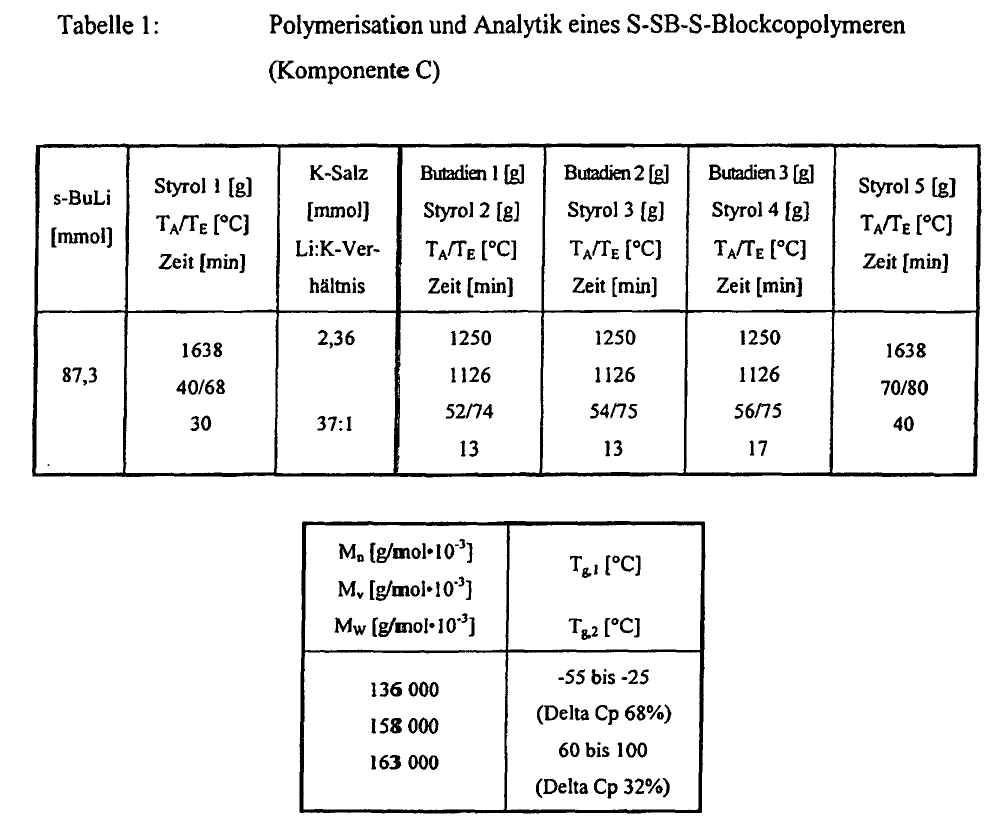

Die mittleren Molmassen (in g/mol), des Polymeren wurden durch Gelpermeationschromatographie (Kalibration gegen Polystyrol) ermittelt. Dabei bedeuten Mₙ Zahlenmittel, Mᵥ Viskositätsmittel und M_{w} Gewichtsmittel.

Die Glasübergangstemperaturen T_{g} wurden mittels DSC bestimmt und betrugen -55°C bis -25°C für die Weichphase und +60°C bis +100°C für die Hartphase.

Der Schmelzvolumenindex MVI wurde bei 200°C und einer Belastung von 5 kg nach DIN 53 735 bestimmt und betrug 8,5 ml/10 min.

### Thermoplastische Formmassen

Die Herstellung der erfindungsgemäßen Formmassen und der Vergleichsmassen erfolgte auf einem ZSK-30 Extruder von Wemer und Pfleiderer bei 250°C mit 200 UPM und 10 kg/h Durchsatz. Das Produkt wurde in einem Wasserbad abgekühlt, granuliert und auf einer Spritzgußmaschine (Arburg Allrounder) zu Prüfkörpern abgespritzt. Die Prüfung der Reißdehnung erfolgte nach DIN 53504.

Die Ergebnisse bezüglich der ersten Ausführungsform der vorliegenden Erfindung sind in den folgenden Tabellen 2 und 3 aufgeführt.

Die Ergebnisse bezüglich der zweiten Ausführungsform der Erfindung sind in den folgenden Tabellen 4 bis 8 aufgeführt.

**Tabelle 2**

| **Mischung/Komponente** | **Einheit** | **1** | **2** | **3** | **4** | **5** |
|---|---|---|---|---|---|---|
| A3 | % | 40 | 38 | 36 | 34 | 32 |
| B3 | % | 60 | 57 | 54 | 51 | 48 |
| C | % | 0 | 5 | 10 | 15 | 20 |
| MVR 220/10 | cm³/10min | 3,6 | 4,7 | 6,1 | 8,9 | 13 |
| Bruchspannung | Mpa | 33 | 29 | 27 | 26 | 24 |
| Streckdehnung | % | 3,1 | 3,3 | 3,2 | 3,3 | 3,4 |
| Schlagzähigkeit Charpy 23°C | kJ/m² | kein Bruch | kein Bruch | kein Bruch | kein Bruch | kein Bruch |
| Kerbschlagzähigkeit Charpy, 23°C | kJ/m² | 32,8 | 34,9 | 40,4 | 43,9 | 47,1 |
| Kerbschlagzähigkeit Charpy, -30°C | kJ/m² | 17 | 9 | 10 | 8 | 5 |
| Durchstoßtest | | 25 | 26 | 26 | 26 | 24 |
| Vergilbung nach 16 h Belichtung | | +32 | +25 | +27 | +27 | +27 |
| Vicat | °C | 96,5 | 94 | 91 | 85 | 80 |

**Tabelle 3**

| Mischung/Komponente | Einheit | 11 | 12 | 13 | 14 | 15 |
|---|---|---|---|---|---|---|
| A1 | % | 42 | 39,9 | 37,8 | 35,7 | 33,6 |
| B4 | % | 58 | 55,1 | 52,2 | 49,3 | 46,4 |
| C | % | 0 | 5 | 10 | 15 | 20 |
| MVR 220/10 | cm³/10min | 4,7 | 4,9 | 7,9 | 8,9 | 13,3 |
| Bruchspannung | Mpa | 35 | 34 | 31 | 28 | 28 |
| Streckdehnung % | % | 3,5 | 3,4 | 3,5 | 3,5 | 3,6 |
| Kerbschlagzähigkeit Charpy, 23°C | kJ/m² | 46,8 | 48,4 | 49,7 | 28,3 | 22,3 |
| Kerbschlagzähigkeit Charpy, -30°C | kJ/m² | 2,3 | 2,3 | 2 | 1,8 | 1,8 |
| Durchstoßtest MT 220° | | 25 | 25 | 11 | 9 | 9 |
| Vicat°C | °C | 91,5 | 90,5 | 86,2 | 79,3 | 73,4 |

Die Fließfähigkeit der Formmassen wurde am Granulat bestimmt, indem der Schmelzfluß-Volumenindex MVR (melt volume rate) bei 220°C und einer Belastung von 10 kp ermittelt wurde. Angegeben ist die in 10 min. durch eine genormte Düse ausgetragene Menge in ml.

Die Messung der Charpy-Schlagzähigkeit erfolgte nach ISO 179/1 eu, gemessen an 4 mm Zugstäben.

Die Messung der Charpy-Kerbschlagzähigkeit erfolgte an bei 240°C Schmelze-Temperatur / 60°C Werkzeugtemperatur gespritzten Prüfstäben der Abmessung 80 x 10 x 4 mm mit gefräster Kerbe, geprüft entsprechend der Norm ISO 179/leA.

Die Messung der Durchstoßfestigkeit erfolgte nach ISO 6603.

Wärmeformbeständigkeit: sie wurde nach DIN 53 460 als Vicat-Zahl mit der Meßmethode A ermittelt.

**Tabelle 4**

| **Komponente** | **Prüfvorschrift, ISO** | **Einheit** | **1** | **2** | **3** | **4** | **5** | **6** | **7** |
|---|---|---|---|---|---|---|---|---|---|
| A2 | | % | 30 | 29,4 | 28,5 | 27 | 24 | 15 | 6 |
| B1 | | % | 70 | 68,6 | 66,5 | 63 | 56 | 35 | 17 |
| C | | % | 0 | 2 | 5 | 10 | 20 | 50 | 80 |
| Melt-Volume Rate (220°C/10kg) | 1133 | cm³/10min | 16,3 | 16,9 | 18,7 | 23,1 | 34,2 | 73,9 | 74 |
| Vicat-Erweichungstemperatur VST/B/50 | 306 | °C | 101,3 | 100,6 | 99,2 | 97,0 | 99,1 | 59,9 | nmb 1) |
| Charpy Schlagzähigkeit bei 23°C | 179/leU | kJ/m² | 226 | 237 | 276 | 296 | k.b.²) | k.b. ²) | nmb 1) |
| Charpy Schlagzähigkeit bei -30°C | 179/leU | kJ/m² | 82,8 | 93,5 | 105 | 99,4 | 146 | k.b.²⁾ | nmb 1) |
| Charpy Kerbschlagzähigkeit bei 23°C | 179/leA | kJ/m² | 14,3 | 12,4 | 13,7 | 12,5 | 34 | 31 | nmb 1) |
| Charpy Kerbschlagzähigkeit bei -30°C | 179/l eA | kJ/m² | 5,4 | 4,6 | 4,5 | 4,1 | 3,8 | 2,7 | -- |
| IZOD Kerbschlagzähigkeit bei 23°C | 180/1A | kJ/m² | 18,4 | 13,8 | 14,8 | | | | |
| IZOD Kerbschlagzähigkeit bei -30°C | 180/1A | kJ/m² | 5,4 | 4,5 | 4,3 | | | | |
| Dehnung bei Streckspannung | 527-2 | % | 2,9 | 2,9 | 2,9 | 2,9 | 2,9 | 2,5 | 8,4 |
| Nominelle Reißdehnung | 527-2 | % | 7,9 | 9,2 | 10,8 | 14,2 | 21,4 | 117 | 351 |
| Zug-E-Modul | 527-2 | MPa | 2390 | 2330 | 2245 | 2148 | 1745 | 1108 | 298 |
| Biegefestigkeit (max) | 178 | MPa | 74,9 | 72,9 | 69,4 | 63,6 | 47,3 | 26,7 | -- |
| Yellowness | | | 48,8 | 48,1 | 47,1 | 44,1 | 41,7 | 34 | 22,4 |

| | | | | | | | | | |
|---|---|---|---|---|---|---|---|---|---|
| ¹⁾nmb: nicht meßbar | | | | | | | | | |
| ²⁾kb: kein Bruch | | | | | | | | | |

**Tabelle 5**

| **Komponente** | **Prüfvorschrift, ISO** | **Einheit** | **1** | **2** | **3** | **4** | **5** | **6** | **7** |
|---|---|---|---|---|---|---|---|---|---|
| A3 | | % | 30 | 29,4 | 28,5 | 27 | 24 | 15 | 6 |
| B2 | | % | 70 | 68,6 | 66,5 | 63 | 56 | 35 | 17 |
| C | | % | 0 | 2 | 5 | 10 | 20 | 50 | 80 |
| Melt-Volume Rate (220°C/10kg) | 1133 | cm³/10min | 17,2 | 19,8 | 21,5 | 26,1 | 36,5 | 72,8 | nmb¹⁾ |
| Vicat-Erweichungstemperatur VST/B/50 | 306 | °C | 96,3 | 95,5 | 94,3 | 90,6 | 83,2 | nmb¹⁾ | nmb¹⁾ |
| Charpy Schlagzähigkeit bei 23°C | 179/1eU | kJ/m² | 157 | 208 | 221 | 269 | k.b.²⁾ | k.b.²⁾ | nmb¹⁾ |
| Charpy Schlagzähigkeit bei -30°C | 179/1eU | kJ/m² | 101 | 119 | 121 | 124 | 138 | k.b.²⁾ | nmb¹⁾ |
| Charpy Kerbschlagzähigkeit bei 23°C | 179/1eA | kJ/m² | 22,9 | 27,1 | 31,3 | 37,1 | 34,4 | 55,3 | nmb¹⁾ |
| Charpy Kerbschlagzähigkeit bei -30°C | 179/1eA | kJ/m² | 7,5 | 6,8 | 6,2 | 5,2 | 3,6 | 3,3 | nmb¹⁾ |
| IZOD Kerbschlagzähigkeit bei 23°C | 180/1A | kJ/m² | 17,6 | 23,3 | 28,7 | - | - | - | - |
| IZOD Kerbschlagzähigkeit bei -30°C | 1801/1A | kJ/m² | 7,6 | 7,3 | 6,7 | - | - | - | - |
| Dehn-Streckspannung | 527-2 | % | 2,7 | 2,8 | 2,9 | 2,9 | 2,9 | 3,2 | 10,9 |
| Nominelle Reißdehnung | 527-2 | % | 5,2 | 5,7 | 8,7 | 11,6 | 21,4 | 122 | 389 |
| Zug-E-Modul | 527-2 | MPa | 2205 | 2143 | 2063 | 1946 | 1746 | 986 | 251 |
| Biegefestigkeit (max) | 178 | MPa | 65,9 | 63,8 | 60,9 | 55,6 | 47,6 | 22,5 | - |
| Yellowness | | | 27,3 | 26,0 | 24,4 | 23,3 | 21,5 | 15,5 | nmb¹⁾ |

| | | | | | | | | | |
|---|---|---|---|---|---|---|---|---|---|
| ¹⁾nmb: nicht meßbar | | | | | | | | | |
| ²⁾k.b.: kein Bruch | | | | | | | | | |

**Tabelle 6**

| **Komponente** | **Prüfvorschrift, ISO** | **Einheit** | **1** | **2** | **3** | **4** | **5** |
|---|---|---|---|---|---|---|---|
| A3 | | % | 30 | 29,4 | 28,5 | 27 | 24 |
| B3 | | % | 70 | 68,6 | 66,5 | 63 | 56 |
| C | | % | 0 | 2 | 5 | 10 | 20 |
| Melt-Volume Rate (220°C/10kg) | 1133 | cm³/10min | 6,4 | 7,2 | 8,4 | 11,4 | 18,8 |
| Vicat-Erweichungstemperatur VST/B/50 | 306 | °C | 99,9 | 99,3 | 98,1 | 94,4 | 80 |
| Charpy Schlagzähigkeit bei 23°C | 179/1eU | kJ/m² | 183 | 232 | 221 | 269 | k.b.²⁾ |
| Charpy Schlagzähigkeit bei -30°C | 179/1eU | kJ/m² | 110 | 107 | 92,4 | 137 | 154 |
| Charpy Kerbschlagzähigkeit bei 23°C | 179/1eA | kJ/m² | 16,9 | 21,9 | 27,6 | 35,6 | 30,2 |
| Charpy Kerbschlagzähigkeit bei -30°C | 179/1eA | kJ/m² | 6,9 | 6,7 | 5,9 | 4,9 | 2,6 |
| IZOD Kerbschlagzähigkeit bei 23°C | 180/1A | kJ/m² | 14,1 | 17,2 | 22,5 | - | - |
| IZOD Kerbschlagzähigkeit bei - 30°C | 180/1A | kJ/m² | 6,9 | 6,4 | 5,5 | - | - |
| Dehn-Streckspannung | 527-2 | % | 3,1 | 3,1 | 3,1 | 3,0 | 3,0 |
| Nominelle Reißdehnung | 527-2 | % | 4,9 | 5,7 | 8,2 | 12,8 | 24,9 |
| Zug-E-Modul | 527-2 | MPa | 2290 | 2240 | 2180 | 2050 | 1760 |
| Biegefestigkeit (max) | 178 | MPa | 73,0 | 70,9 | 67,1 | 60,0 | 50,5 |
| Yellowness | | | 27,5 | 26,5 | 25,0 | 23,8 | 21,6 |

| | | | | | | | |
|---|---|---|---|---|---|---|---|
| ²⁾k.b.: kein Bruch | | | | | | | |

**Tabelle 7**

| **Komponente** | **Prüfvorschrift, ISO** | **Einheit** | **1** | **2** | **3** | **4** | **5** |
|---|---|---|---|---|---|---|---|
| A4 | | % | 30 | 29,4 | 28,5 | 27 | 24 |
| B4 | | % | 70 | 68,6 | 66,5 | 63 | 56 |
| C | | % | 0 | 2 | 5 | 10 | 20 |
| Melt-Volume Rate (220°C/10kg) | 1133 | cm³/10min | 2,7 | 2,7 | 3,4 | 4,8 | 11,6 |
| Vicat-Erweichungstemperatur VST/B/50 | 306 | °C | 100,3 | 99,6 | 97,8 | 91,2 | 75 |
| Charpy Schlagzähigkeit bei 23°C | 179/1eU | kJ/m² | 198 | 236 | nb ¹⁾ | nb¹⁾ | nb¹⁾ |
| Charpy Schlagzähigkeit bei -30°C | 179/1eU | kJ/m² | 85,5 | 118 | 107 | 135 | 61 |
| Charpy Kerbschlagzähigkeit bei 23°C | 179/1eA | kJ/m² | 9,3 | 10,7 | 12,2 | 17,5 | 29,6 |
| Charpy Kerbschlagzähigkeit bei -30°C | 179/1eA | kJ/m² | 2,8 | 3,1 | 2,6 | 2,5 | 1,8 |
| IZOD Kerbschlagzähigkeit bei 23°C | 180/1A | kJ/m² | 8,8 | 9,6 | 8,5 | - | - |
| IZOD Kerbschlagzähigkeit bei -30°C | 180/1A | kJ/m² | 3,5 | 3,8 | 3,2 | - | - |
| Dehn-Streckspannung | 527-2 | % | 3,7 | 3,7 | 3,7 | 3,6 | 3,7 |
| Nominelle Reißdehnung | 527-2 | % | 12,7 | 14 | 15 | 20,6 | 42 |
| Zug-E-Modul | 527-2 | MPa | 2180 | 2120 | 2042 | 1920 | 1640 |
| Biegefestigkeit (max) | 178 | MPa | 70,4 | 66,7 | 63,3 | 59,2 | 46,8 |
| Yellowness | | | 42,8 | 43,7 | 42,7 | 43,1 | 39,4 |

| | | | | | | | |
|---|---|---|---|---|---|---|---|
| ¹⁾nicht bestimmt | | | | | | | |

Die Ergebnisse zeigen, daß schon bei geringen Mengen der Komponente C ein Anstieg der Schlagzähigkeit erreicht wird, wobei (bei geringen Mengen) keine wesentliche Verschlechterung der übrigen Eigenschaften der Formmassen eintritt.

**Tabelle 8**

| **Komponente** | **1** | **2** |
|---|---|---|
| A3 [%] | 40 | 39,2 |
| B3 [%] | 60 | 58,8 |
| C [%] | - | 2 |
| IZOD Kerbschlagzähigkeit bei 23°C¹⁾ | 170 | 350 |
| ⊥ [kJ/m²] | | |
| IZOD Kerbschlagzähigkeit bei 23°C ²⁾ | 350 | 350 |
| ∥ [kJ/m²] | | |

| | | |
|---|---|---|
| ¹⁾IZOD-Kerbschlagzähigkeit senkrecht zur Extrusionsrichtung | | |
| ²⁾ IZOD-Kerbschlagzähigkeit parallel zur Extrusionsrichtung | | |

Ein Vergleich der IZOD-Kerbschlagzähigkeiten zwischen Formmassen ohne Zusatz der Komponente C (1) und solchen mit Zusatz der Komponente C (2) zeigt eine deutliche Verbesserung der IZOD-Kerbschlagzähigkeit senkrecht zur Extrusionsrichtung bei Zugabe der Komponente C.

## Patentansprüche

1. Thermoplastische Formmassen, enthaltend
(A) 5 bis 98 Gew.-%, bezogen auf das Gesamtgewicht der Formmassen, eines kautschukartigen Pfropfcopolymerisats, aufgebaut aus
(a₁) 30 bis 90 Gew.-%, bezogen auf (A), einer Pfropfgrundlage mit einer Glasübergangstemperatur (T_{g}) von unter -10 °C aus
(a₁₁) einem zumindest teilweise vernetzten Acrylester-Polymerisat gebildet aus
(a₁₁₁) 50 bis 99,9 Gew.-%, bezogen auf (a₁₁), mindestens eines Alkylacrylates mit 1 bis 10 C-Atomen im Alkylrest,
(a₁₁₂) 0,1 bis 5 Gew.-%, bezogen auf (a₁₁), mindestens eines polyfunktionellen, vernetzend wirkenden Monomeren und
(a₁₁₃) 0 bis 49,9 Gew.-%, bezogen auf (a₁₁), mindestens eines weiteren mit (a₁₁₁) copolymerisierbaren Monomeren aus der Gruppe der Vinylalkylether mit 1 bis 8 C-Atomen im Alkylrest, Butadien, Isopren, Styrol, Acrylnitril, Methacrylnitril und/oder Methylmethacrylat
und/oder
(a₁₂) einem Dienpolymerisat, aufgebaut aus
(a₁₂₁) 60 bis 100 Gew.-%, bezogen auf (a₁₂), mindestens eines Diens und
(a₁₂₂) 0 bis 40 Gew.-%, bezogen auf (a₁₂), weiterer copolymerisierbarer Monomere aus der Gruppe der Alkylacrylate mit 1 bis 10 C-Atomen im Alkylrest, Vinylalkylether mit 1 bis 8 C-Atomen im Alkylrest, Butadien, Isopren, Styrol, Acrylnitril, Methacrylnitril und/oder Methylmethacrylat,
(a₂) 10 bis 70 Gew.-%, bezogen auf (A), einer auf die Pfropfgrundlage aufgepfropften Pfropfauflage mit einer T_{g} von mehr als 50 °C, aufgebaut aus
(a₂₁) 50 bis 95 Gew.-%, bezogen auf (a₂), mindestens eines vinylaromatischen Monomeren,
(a₂₂) 5-50 Gew.-%, bezogen auf (a₂), mindestens eines polaren, copolymerisierbaren Comonomeren aus der Gruppe Acrylnitril, Methacrylnitril, Ester der(Meth)acrylsäure mit 1 bis 4 C-Atomen im Alkylrest, Maleinsäureanhydrid und dessen Imide, (Meth)acrylamid und/oder Vinylalkylether mit 1 bis 8 C-Atomen im Alkylrest oder deren Mischung,
(B) 1 bis 90 Gew.-%, bezogen auf das Gesamtgewicht der Formmasse, eines Copolymerisats aus
(b₁) 50 bis 99 Gew.-%, bezogen auf (B), mindestens eines vinylaromatischen Monomeren
und
(b₂) 1 bis 50 Gew.-%, bezogen auf (B), Monomeren wie für (a₂₂) beschrieben,
(C) 1 bis 70 Gew.-%, bezogen auf (A), (B), (C) und gegebenenfalls (D), eines kautschukelastischen Blockcopolymerisates aus
mindestens einem einpolymerisierte Einheiten aus vinylaromatischen Monomeren aufweisenden, eine Hartphase bildenden Block C_{A} und
mindestens einem einpolymerisierte Einheiten aus vinylaromatischen Monomere sowie einem Dien aufweisenden elastomeren, eine Weichphase bildenden Block C_{B/A},
wobei die Glasübergangstemperatur T_{g} des Blocks C_{A} über 25°C und die des Blocks C_{B/A} unter 25°C liegt und
das Phasenvolumen-Verhältnis von Block C_{A} zu Block C_{B/A} so gewählt ist, daß der Anteil der Hartphase am gesamten Blockcopolymerisat 1 bis 40 Vol.-% und der Gewichtsanteil des Diens im gesamten Blockcopolymerisat weniger als 50 Gew.-% beträgt,
wobei der relative Anteil an 1,2-Verknüpfungen des Polydiens, bezogen auf die Summe an 1,2- und 1,4-cis/trans-Verknüpfungen, unterhalb von 15% liegt,
und
(D) 0-300 Gew.-%, bezogen auf das Gewicht der Komponenten (A) bis (C), eines Polycarbonats,
(E) 0 bis 30 Gew.-%, bezogen auf das Gesamtgewicht der Formmassen, üblicher Zusatzstoffe und Verarbeitungshilfsmittel.

2. Thermoplastische Formmassen, enthaltend
(A) 5 bis 98,9 Gew.-%, bezogen auf das Gesamtgewicht der Formmassen, mindestens eines kautschukartigen Pfropfcopolymerisats, aufgebaut aus
(a₁) 30 bis 90 Gew.-%, bezogen auf (A), einer Pfropfgrundlage mit einer Glasübergangstemperatur (T_{g}) von unter -10 °C aus
(a₁₁) einem zumindest teilweise vernetzten Acrylester-Polymerisat gebildet aus
(a₁₁₁) 50 bis 99,9 Gew.-%, bezogen auf (a₁₁), mindestens eines Alkylacrylates mit 1 bis 10 C-Atomen im Alkylrest,
(a₁₁₂) 0,1 bis 5 Gew.-%, bezogen auf (a₁₁), mindestens eines polyfunktionellen, vernetzend wirkenden Monomeren und
(a₁₁₃) 0 bis 49,9 Gew.-%, bezogen auf (a₁₁), mindestens eines weiteren mit (a₁₁₁)copolymerisierbaren Monomeren aus der Gruppe der Vinylalkylether mit 1 bis 8 C-Atomen im Alkylrest, Butadien, Isopren, Styrol, Acrylnitril, Methacrylnitril und/oder Methylmethacrylat
und/oder
(a₁₂) einem Dienpolymerisat, aufgebaut aus
(a₁₂₁) 60 bis 100 Gew.-%, bezogen auf (a₁₂), mindestens eines Diens und
(a₁₂₂) 0 bis 40 Gew.-%, bezogen auf (a₁₂), weiterer copolymerisierbarer Monomere aus der Gruppe der Alkylacrylate mit 1 bis 10 C-Atomen im Alkylrest, Vinylalkylether mit 1 bis 8 C-Atomen im Alkylrest, Butadien, Isopren, Styrol, Acrylnitril, Methacrylnitril und/oder Methylmethacrylat,
(a₂) 10 bis 70 Gew.-%, bezogen auf (A), einer auf die Pfropfgrundlage aufgepfropften Pfropfauflage mit einer Glasübergangstemperatur (T_{g}) von mehr als 50 °C, aufgebaut aus
(a₂₁) 65 bis 95 Gew.-%, bezogen auf (a₂), mindestens eines vinylaromatischen Monomeren,
(a₂₂) 5 bis 35 Gew.-%, bezogen auf (a₂), mindestens eines polaren, copolymerisierbaren Comonomeren aus der Gruppe Acrylnitril, Methacrylnitril, Ester der(Meth)acrylsäure mit 1 bis 4 C-Atomen im Alkylrest, Maleinsäureanhydrid und dessen Imide, (Meth)acrylamid und/oder Vinylalkylether mit 1 bis 8 C-Atomen im Alkylrest oder deren Mischung,
(B) 1 bis 90 Gew.-%, bezogen auf das Gesamtgewicht der Formmasse, eines Copolymerisats aus
(b₁) 69 bis 81 Gew.-%, bezogen auf (B), mindestens eines vinylaromatischen Monomeren
und
(b₂) 19 bis 31 Gew.-%, bezogen auf (B), Monomeren wie für (a₂₂) beschrieben,
(C) 0,1 bis 70 Gew.-%, bezogen auf (A), (B), (C) und gegebenenfalls (D) und (E), eines kautschukelastischen Blockcopolymerisates aus
mindestens einem einpolymerisierte Einheiten aus vinylaromatische Monomeren aufweisenden, eine Hartphase bildenden Block C_{A} und
mindestens einem einpolymerisierte Einheiten aus vinylaromatische Monomeren sowie ein Dien aufweisenden elastomeren, eine Weichphase bildenden Block C_{B/A},
wobei die Glasübergangstemperatur T_{g} des Blocks C_{A} über 25°C und die des Blocks C_{B/A} unter 25°C liegt und
das Phasenvolumen-Verhältnis von Block C_{A} zu Block C_{B/A} so gewählt ist, daß der Anteil der Hartphase am gesamten Blockcopolymerisat 1 bis 40 Vol.-% und der Gewichtsanteil des Diens im gesamten Blockcopolymerisat weniger als 50 Gew.-% beträgt,
wobei der relative Anteil an 1,2-Verknüpfungen des Polydiens, bezogen auf die Summe an 1,2- und 1,4-cis/trans-Verknüpfungen, unterhalb von 15% liegt,
und
(D) 0-300 Gew.-%, bezogen auf das Gewicht der Komponenten (A) bis (C), eines Polycarbonats, S-MSA-Copolymeren (Styrol-Maleinsäure-Copolyeren), S-Imid-MSA-Copolymeren (Styrol-Imid-Maleinsäureanhydrid-Copolymeren), S-Imid-AN-MSA-Copolymeren (Styrol-Imid-Acrylnitril-Maleinsäureanhydrid-Copolymeren), eines Polymethacrylimids oder eines Polymethacrylats,
(E) 0 bis 30 Gew.-%, bezogen auf das Gesamtgewicht der Formmassen, üblicher Zusatzstoffe und Verarbeitungshilfsmittel.

3. Thermoplastische Formmassen nach Anspruch 2, **dadurch gekennzeichnet, daß** der Anteil der Komponente (C) 0,1 bis 15 Gew.-%, bezogen auf (A), (B), (C) und gegebenenfalls (D) und (E) beträgt.

4. Thermoplastische Formmassen nach einem der Ansprüche 1 bis 3, wobei als Komponente (A) ein Pfropfcopolymerisat mit einer Pfropfgrundlage (a₁₂) eingesetzt wird.

5. Thermoplastische Formmassen nach einem der Ansprüche 1 bis 4, **dadurch gekennzeichnet, daß** in der Komponente (C) das vinylaromatische Monomere ausgewählt ist aus Styrol, α-Methylstyrol, Vinyltoluol, 1,1-Diphenylethylen sowie Mischungen dieser Verbindungen und das Dien aus Butadien, Isopren, Piperylen, 1-Phenylbutadien sowie Mischungen dieser Verbindungen.

6. Thermoplastische Formmassen nach einem der Ansprüche 1 bis 5, in denen die Komponente (C) durch eine der allgemeinen Formeln 1 bis 11 dargestellt wird:
(1) (C_{A-}C_{(B/A)})ₙ;
(2) (C_{A-}C_{(B/A)})ₙ-C_{A};
(3) C_{(B/A)}-(C_{A}.C_{(B/A)})ₙ;
(4) X-[(C_{A-}C_{(B/A)})ₙ]ₘ₊₁;
(5) X-[(C(_{B/A})-C_{A})ₙ]ₘ₊₁;
(6) X-[(C_{A-}C_{(B/A)})ₙ-C_{A}]ₘ₊₁;
(7) X-[(C_{(B/A)}-C_{A})ₙ-C_{(B/A)}]ₘ₊₁;
(8) Y-[(C_{A-}C_{(B/A)})ₙ]ₘ₊₁;
(9) Y-[(C_{(B/A)}-C_{A})ₙ]ₘ₊₁;
(10) Y-[(C_{A-}C_{(B/A)})ₙ-C_{A}]ₘ₊₁;
(11) Y-[(C_{(B/A)}-C_{A})ₙ-C_{(B/A)}]ₘ₊₁;
wobei C_{A} für den vinylaromatischen Block und C_{(B/A)} für die Weichphase, also den statistisch aus Dien- und vinylaromatischen Einheiten aufgebauten Block steht, X den Rest eines n-funktionellen Initiators, Y den Rest eines m-funktionellen Kopplungsmittels und m und n natürliche Zahlen von 1 bis 10 bedeuten.

7. Thermoplastische Formmassen nach einem der Ansprüche 1 bis 6, **dadurch gekennzeichnet, daß** in der Komponente (C) das Molekulargewicht des Blocks C_{A} zwischen 1000 und 200 000 liegt und das des Blocks C(_{B/A}) zwischen 2 000 und 250 000 [g/mol].

8. Verfahren zur Herstellung thermoplastischer Formmassen nach einem der Ansprüche 1 bis 7, **dadurch gekennzeichnet, daß** die Komponenten nach an sich bekannten Mischverfahren gemischt werden.

9. Verwendung der thermoplastischen Formmassen nach einem der Ansprüche 1 bis 7 zur Herstellung von Folien, Formkörpem und Fasern.

10. Formkörper erhältlich unter Verwendung der thermoplastischen Formmassen nach einem der Ansprüche 1 bis 7.

## Claims

1. A thermoplastic molding composition comprising
(A) from 5 to 98% by weight, based on the total weight of the molding composition, of an elastomeric graft copolymer built up from
(a₁) from 30 to 90% by weight, based on (A), of a graft base with a glass transition temperature (T_{g}) below -10°C made from
(a₁₁) an at least partially crosslinked acrylate polymer formed from
(a₁₁₁) from 50 to 99.9% by weight, based on (a₁₁), of at least one C₁-C₁₀-alkyl acrylate,
(a₁₁₂) from 0.1 to 5% by weight, based on (a₁₁), of at least one polyfunctional crosslinking monomer and
(a₁₁₃) from 0 to 49.9% by weight, based on (a₁₁), of at least one further monomer which is copolymerizable with (a₁₁₁) selected from the group consisting of the vinyl C₁-C₈-alkyl ethers, butadiene, isoprene, styrene, acrylonitrile and methacrylonitrile, and/or methyl methacrylate
and/or
(a₁₂) a diene polymer built up from
(a₁₂₁) from 60 to 100% by weight, based on (a₁₂), of at least one diene and
(a₁₂₂) from 0 to 40% by weight, based on (a₁₂), of further copolymerizable monomers selected from the group consisting of the C₁-C₁₀-alkyl acrylates, vinyl C₁-C₈-alkyl ethers, butadiene, isoprene, styrene, acrylonitrile and methacrylonitrile, and/or methyl methacrylate,
(a₂) from 10 to 70% by weight, based on (A), of a graft with a (T_{g}) above 50°C, grafted onto the graft base and built up from
(a₂₁) from 50 to 95% by weight, based on (a₂), of at least one vinylaromatic monomer,
(a₂₂) from 5 to 50% by weight, based on (a₂), of at least one polar, copolymerizable comonomer selected from the group consisting of acrylonitrile, methacrylonitrile, C₁-C₄-alkyl (meth)acrylates, maleic anhydride and maleimides, and (meth)acrylamide, and/or vinyl C₁-C₈-alkyl ethers, or a mixture of these,
(B) from 1 to 90% by weight, based on the total weight of the molding composition, of a copolymer composed of
(b₁) from 50 to 99% by weight, based on (B), of at least one vinylaromatic monomer
and
(b₂) from 1 to 50% by weight, based on (B), of monomers as described for (a₂₂),
(C) from 1 to 70% by weight, based on (A), (B), (C) and, where appropriate, (D), of an elastomeric block copolymer composed of
at least one block C_{A} forming a hard phase and having copolymerized units of vinylaromatic monomers, and
at least one elastomeric block C(_{B/A}) forming a soft phase and having copolymerized units of vinylaromatic monomers, and also of a diene,
where the glass transition temperature (T_{g}) of the block C_{A} is above 25°C and that of the block C_{(B/A)} is below 25°C, and
the selected phase-volume ratio of block C_{A} to block C_{(B/A)} is such that the proportion of the hard phase in the entire block copolymer is from 1 to 40% by volume and the proportion by weight of the diene in the entire block copolymer is less than 50% by weight,
where the proportion of 1,2-linkages in the polydiene, based on the total of 1,2- and 1,4-cis/trans linkages, is below 15%,
and
(D) from 0 to 300% by weight, based on the weight of components (A) to (C), of a polycarbonate,
(E) from 0 to 30% by weight, based on the total weight of the molding composition, of conventional additives and processing aids.

2. A thermoplastic molding composition comprising
(A) from 5 to 98% by weight, based on the total weight of the molding composition, of at least one elastomeric graft copolymer built up from
(a₁) from 30 to 90% by weight, based on (A), of a graft base with a glass transition temperature (T_{g}) below -10°C made from
(a₁₁) an at least partially crosslinked acrylate polymer formed from
(a₁₁₁) from 50 to 99.9% by weight, based on (a₁₁), of at least one C₁-C₁₀-alkyl acrylate,
(a₁₁₂) from 0.1 to 5% by weight, based on (a₁₁), of at least one polyfunctional crosslinking monomer and
(a₁₁₃) from 0 to 49.9% by weight, based on (a₁₁), of at least one further monomer which is copolymerizable with (a₁₁₁) selected from the group consisting of the vinyl C₁-C₈-alkyl ethers, butadiene, isoprene, styrene, acrylonitrile and methacrylonitrile, and/or methyl methacrylate
and/or
(a₁₂) a diene polymer built up from
(a₁₂₁) from 60 to 100% by weight, based on (a₁₂), of at least one diene and
(a₁₂₂) from 0 to 40% by weight, based on (a₁₂), of further copolymerizable monomers selected from the group consisting of the C₁-C₁₀-alkyl acrylates, vinyl C₁-C₈-alkyl ethers, butadiene, isoprene, styrene, acrylonitrile and methacrylonitrile, and/or methyl methacrylate,
(a₂) from 10 to 70% by weight, based on (A), of a graft with a glass transition temperature (T_{g}) above 50°C, grafted onto the graft base and built up from
(a₂₁) from 65 to 95% by weight, based on (a₂), of at least one vinylaromatic monomer,
(a₂₂) from 5 to 35% by weight, based on (a₂), of at least one polar, copolymerizable comonomer selected from the group consisting of acrylonitrile, methacrylonitrile, C₁-C₄-alkyl (meth)acrylates, maleic anhydride and maleimides, and (meth)acrylamide, and/or vinyl C₁-C₈-alkyl ethers, or a mixture of these,
(B) from 1 to 90% by weight, based on the total weight of the molding composition, of a copolymer composed of
(b₁) from 69 to 81% by weight, based on (B), of at least one vinylaromatic monomer
and
(b₂) from 19 to 31% by weight, based on (B), of monomers as described for (a₂₂),
(C) from 1 to 70% by weight, based on (A), (B), (C) and, where appropriate, (D) and (E), of an elastomeric block copolymer composed of
at least one block C_{A} forming a hard phase and having copolymerized units of vinylaromatic monomers, and
at least one elastomeric block C_{(B/A)} forming a soft phase and having copolymerised units of vinylaromatic monomers, and also containing a diene,
where the glass transition temperature (T_{g}) of the block C_{A} is above 25°C and that of the block C(_{B/A}) is below 25°C, and
the selected phase-volume ratio of block C_{A} to block C(_{B/A}) is such that the proportion of the hard phase in the entire block copolymer is from 1 to 40% by volume and the proportion by weight of the diene in the entire block copolymer is less than 50% by weight,
where the proportion of 1,2-linkages in the polydiene, based on the total of 1,2- and 1,4-cis/trans linkages, is below 15%,
and
(D) from 0 to 300% by weight, based on the weight of components (A) to (C), of a polycarbonate, of S-MA copolymers (styrene-maleic acid copolymers), of S-imide-MA copolymers (styrene-imide-maleic anhydride copolymers), of S-imide-AN-MA copolymers (styrene-imide-acrylonitrile-maleic anhydride copolymers), of a polymethacrylamide, or of a polymethacrylate, and
(E) from 0 to 30% by weight, based on the total weight of the molding composition, of conventional additives and processing aids.

3. A thermoplastic molding composition as claimed in claim 2, wherein the proportion of component (C) is from 0.1 to 15% by weight, based on (A), (B), (C) and, where appropriate, (D) and (E).

4. A thermoplastic molding composition as claimed in any of claims 1 to 3, where a graft copolymer with a graft base (a₁₂) is used as component (A).

5. A thermoplastic molding composition as claimed in any of claims 1 to 4, wherein the vinylaromatic monomer in component (C) has been selected from the group consisting of styrene, α-methylstyrene, vinyltoluene, 1,1-diphenylethylene and mixtures of these compounds, and the diene has been selected from the group consisting of butadiene, isoprene, piperylene, 1-phenylbutadiene and mixtures of these compounds.

6. A thermoplastic molding composition as claimed in any of claims 1 to 5, in which component (C) has one of the formulae 1 to 11:
(13) (C_{A-}C_{(B/A)})ₙ;
(13) (C_{A-}C_{(B/A)})ₙ-C_{A};
(14) C_{(B/A)}-(C_{A}.C_{(B/A)})ₙ;
(15) X-[(C_{A-}C_{(B/A)})ₙ]ₘ₊₁;
(16) X-[(C(_{B/A})-C_{A})ₙ]ₘ₊₁;
(17) X-[(C_{A-}C_{(B/A)})ₙ-C_{A}]ₘ₊₁;
(18) X-[(C_{(B/A)}-C_{A})ₙ-C_{(B/A)}]ₘ₊₁;
(19) Y-[(C_{A-}C_{(B/A)})ₙ]ₘ₊₁;
(20) Y-[(C_{(B/A)}-C_{A})ₙ]ₘ₊₁;
(21) Y-[(C_{A-}C_{(B/A)})ₙ-C_{A}]ₘ₊₁;
(22) Y-[(C_{(B/A)}-C_{A})ₙ-C_{(B/A)}]ₘ₊₁;
where C_{A} is the vinylaromatic block and C_{(B/A)} is the soft phase, i.e. the block built up randomly from diene units and from vinylaromatic units, X is the residue of an n-functional initiator, Y is the residue of an m-functional coupling agent, and m and n are natural numbers from 1 to 10.

7. A thermoplastic molding composition as claimed in any of claims 1 to 6, wherein the molar mass of the block C_{A} in component (C) is from 1000 to 200 000 and that of the block C(_{B/A}) is from 2 000 to 250 000 [g/mol].

8. A process for preparing thermoplastic molding compositions as claimed in any of claims 1 to 7, which comprises mixing the components by mixing processes known per se.

9. The use of a thermoplastic molding composition as claimed in any of claims 1 to 7 for producing films, moldings or fibers.

10. A molding obtainable using a thermoplastic molding composition as claimed in any of claims 1 to 7.

## Revendications

1. Masses de moulage thermoplastiques, contenant
(A) de 5 à 98% en poids, par rapport au poids total de la masse de moulage, d'un copolymère greffé caoutchouteux constitué de
(a₁) 30 à 90% en poids, par rapport à (A), d'une base de greffage d'une température de transition vitreuse (T_{g}) inférieure à -10°C et constituée de
(a₁₁) un polymère d'ester acrylique au moins partiellement réticulé constitué de
(a₁₁₁) 50 à 99,9% en poids, par rapport à (a₁₁), d'au moins un acrylate d'alkyle comportant de 1 à 10 atomes de C dans le radical alkyle,
a₁₁₂) 0,1 à 5% en poids, par rapport à (a₁₁), d'au moins un monomère polyfonctionnel à action réticulante, et
a₁₁₃) 0 à 49,9% en poids, par rapport à (a₁₁), d'au moins un autre monomère copolymérisable avec (a₁₁₁) du groupe formé par des éthers vinylalkyliques comportant de 1 à 8 atomes de C dans le radical alkyle, le butadiène, l'isoprène, le styrène, l'acrylonitrile, le méthacrylonitrile et/ou le méthacrylate de méthyle
et/ou
(a₁₂) un polymère de diène constitué de
(a₁₂₁) 60 à 100% en poids, par rapport à (a₁₂), d'au moins un diène et
(a₁₂₂) 0 à 40% en poids, par rapport à (a₁₂), d'autres monomères copolymérisables du groupe formé par des acrylates d'alkyle comportant de 1 à 10 atomes de C dans le radical alkyle, des éthers vinylalkyliques comportant de 1 à 8 atomes de C dans le radical alkyle, le butadiène, l'isoprène, le styrène, l'acrylonitrile, le méthacrylonitrile et/ou le méthacrylate de méthyle,
(a₂) de 10 à 70% en poids, par rapport à (A), d'une enveloppe de greffage greffée sur la base de greffage et d'une T_{g} supérieure à 50°C, constituée de
(a₂₁) 50 à 95% en poids, par rapport à (a₂), d'au moins un monomère vinylaromatique,
(a₂₂) 5 à 50% en poids, par rapport à (a₂), d'au moins un comonomère polaire copolymérisable du groupe formé par l'acrylonitrile, le méthacrylonitrile, des esters d'acide (méth)acrylique comportant de 1 à 4 atomes de C dans le radical alkyle, l'anhydride maléique et ses imides, le (méth)acrylamide et/ou des éthers vinylalkyliques comportant de 1 à 8 atomes de C dans le radical alkyle, ou leurs mélanges,
(B) de 1 à 90% en poids, par rapport au poids total de la masse de moulage, d'un copolymère constitué de
(b₁) 50 à 99% en poids, par rapport à (B), d'au moins un monomère vinylaromatique
et
(b₂) 1 à 50% en poids, par rapport à (B), de monomères tels que décrits pour (a₂₂),
(C) de 1 à 70% en poids, par rapport à (A), (B), (C) et éventuellement (D), d'un copolymère bloc à élasticité de caoutchouc constitué de
au moins un bloc C_{A} formant une phase dure et présentant des unités copolymérisées de monomères vinylaromatiques et
au moins un bloc élastomère C_{B/A} formant une phase molle et présentant des unités de monomère vinylaromatique ainsi qu'un diène,
la température de transition vitreuse Tg du bloc C_{A} étant supérieure à 25°C et celle du bloc C_{B/A} étant inférieure à 25°C, et
la proportion volumique de phases du bloc C_{A} au bloc C_{B/A} étant choisie de manière que la fraction de la phase dure par rapport à l'ensemble du copolymère bloc 1 soit de 1 à 40% en volume et que la fraction pondérale du diène dans l'ensemble du copolymère bloc soit de moins de 50% en poids,
la fraction relative des liaisons 1,2 du polydiène, par rapport à la somme des liaisons 1,2- et 1,4-cis/trans étant inférieure à 15%,
et
(D) de 0 à 300% en poids, par rapport au poids des composants (A) à (C), d'un polycarbonate,
(E) de 0 à 30% en poids, par rapport au poids total de la masse de moulage, d'additifs et d'adjuvants de traitement usuels.

2. Masses de moulage thermoplastiques, contenant
(A) de 5 à 98,9% en poids, par rapport au poids total de la masse de moulage, d'au moins un copolymère greffé caoutchouteux constitué de
(a₁) 30 à 90% en poids, par rapport à (A), d'une base de greffage d'une température de transition vitreuse (T_{g}) inférieure à -10°C et constituée de
(a₁₁) un polymère d'ester acrylique au moins partiellement réticulé constitué de
(a₁₁₁) 50 à 99,9% en poids, par rapport à (a₁₁), d'au moins un acrylate d'alkyle comportant de 1 à 10 atomes de C dans le radical alkyle,
a₁₁₂) 0,1 à 5% en poids, par rapport à (a₁₁), d'au moins un monomère polyfonctionnel à action réticulante, et
a₁₁₃) 0 à 49,9% en poids, par rapport à (a₁₁), d'au moins un autre monomère copolymérisable avec (a₁₁₁) du groupe formé par des éthers vinylalkyliques comportant de 1 à 8 atomes de C dans le radical alkyle, le butadiène, l'isoprène, le styrène, l'acrylonitrile, le méthacrylonitrile et/ou le méthacrylate de méthyle
et/ou
(a₁₂) un polymère de diène constitué de
(a₁₂₁) 60 à 100% en poids, par rapport à (a₁₂), d'au moins un diène et
(a₁₂₂) 0 à 40% en poids, par rapport à (a₁₂), d'autres monomères copolymérisables du groupe formé par des acrylates d'alkyle comportant de 1 à 10 atomes de C dans le radical alkyle, des éthers vinylalkyliques comportant de 1 à 8 atomes de C dans le radical alkyle, le butadiène, l'isoprène, le styrène, l'acrylonitrile, le méthacrylonitrile et/ou le méthacrylate de méthyle,
(a₂) de 10 à 70% en poids, par rapport à (A), d'une enveloppe de greffage greffée sur la base de greffage et d'une Tg supérieure à 50°C, constitué de
(a₂₁) 65 à 95% en poids, par rapport à (a₂) d'au moins un monomère vinylaromatique,
(a₂₂) 5 à 35% en poids, par rapport à (a₂), d'au moins un comonomère polaire copolymérisable du groupe formé par l'acrylonitrile, le méthacrylonitrile, des esters d'acide (méth)acrylique comportant de 1 à 4 atomes de C dans le radical alkyle, l'anhydride maléique et ses imides, le (méth)acrylamide et/ou des éthers vinylalkyliques comportant de 1 à 8 atomes de C dans le radical alkyle, ou leurs mélanges,
(B) de 1 à 90% en poids, par rapport au poids total de la masse de moulage, d'un copolymère constitué de
(b₁) 69 à 81% en poids, par rapport à (B), d'au moins un monomère vinylaromatique
et
(b₂) 19 à 31% en poids, par rapport à (B), de monomères tels que décrits pour (a₂₂),
(C) de 0,1 à 70% en poids, par rapport à (A), (B), (C) et éventuellement (D) et (E), d'un copolymère bloc à élasticité de caoutchouc constitué de
au moins un bloc C_{A} formant une phase dure et présentant des unités copolymérisées de monomères vinylaromatiques et
au moins un bloc élastomère C_{B/A} formant une phase molle et présentant des unités de monomère vinylaromatique ainsi qu'un diène,
la température de transition vitreuse Tg du bloc C_{A} étant supérieure à 25°C et celle du bloc C_{B/A} étant inférieure à 25°C, et
la proportion volumique de phases du bloc C_{A} au bloc C_{B/A} étant choisie de manière que la fraction de la phase dure par rapport à l'ensemble du copolymère bloc 1 soit de 1 à 40% en volume et que la fraction pondérale du diène dans l'ensemble du copolymère bloc soit de moins de 50% en poids,
la fraction relative des liaisons 1,2 du polydiène, par rapport à la somme des liaisons 1,2- et 1,4-cis/trans soit inférieure à 15%,
et
(D) de 0 à 300% en poids, par rapport au poids des composants (A) à (C), d'un polycarbonate, de copolymères S-MSA (copolymères de styrène - acide maléique), de copolymères S-imide-MSA (copolymères de styrène - imide - anhydride maléique), de copolymères S-imide-AN-MSA (copolymères de styrène - imide - acrylonitrile - anhydride maléique), d'un polyméthacrylimide ou d'un polyméthacrylate,
(E) de 0 à 30% en poids, par rapport au poids total de la masse de moulage, d'additifs et d'adjuvants de traitement usuels.

3. Masses de moulage thermoplastiques selon la revendication 2, **caractérisées en ce que** le fraction du composant (C) est de 0,1 à 15% en poids, par rapport à (A), (B), (C) et éventuellement (D) et (E).

4. Masses de moulage thermoplastiques selon l'une quelconque des revendications 1 à 3, où l'on met en oeuvre en tant que composant (A) un copolymère greffé comportant une base de greffage (a₁₂).

5. Masses de moulage thermoplastiques selon l'une quelconque des revendications 1 à 4, **caractérisées en ce que**, dans le composant (C), le monomère vinylaromatique est choisi parmi du styrène, de l'α-méthylstyrène, du vinyltoluène, du 1,1-diphényléthylène ainsi que des mélanges de ces composés, et que le diène est choisi parmi le butadiène, l'isoprène, le pipérylène, le 1-phénylbutadiène et des mélanges de ces composés.

6. Masses de moulage thermoplastiques selon l'une quelconque des revendications 1 à 5, dans lesquelles le composant (C) est représenté par l'une des formules générales 1 à 11:
(1) (C_{A-}C_{(B/A)})ₙ;
(2) (C_{A-}C_{(B/A)})ₙ-C_{A};
(3) C_{(B/A)}-(C_{A}.C_{(B/A)})ₙ;
(4) X-[(C_{A-}C_{(B/A)})ₙ]ₘ₊₁;
(5) X-[(C(_{B/A})-C_{A})ₙ]ₘ₊₁;
(6) X-[(C_{A-}C_{(B/A)})ₙ-C_{A}]ₘ₊₁;
(7) X-[(C_{(B/A)}-C_{A})ₙ-C_{(B/A)}]ₘ₊₁;
(8) Y-[(C_{A-}C_{(B/A)})ₙ]ₘ₊₁;
(9) Y-[(C_{(B/A)}-C_{A})ₙ]ₘ₊₁;
(10) Y-[(C_{A-}C_{(B/A)})ₙ-C_{A}]ₘ₊₁;
(11) Y-[(C_{(B/A)}-C_{A})ₙ-C_{(B/A)}]ₘ₊₁;
où C_{A} représente le bloc vinylaromatique et C_{(B/A)} la phase molle, soit le bloc constitué de manière statistique d'unités de diène et vinylaromatiques, X représente le reste d'un initiateur à n fonctionnalités, Y représente le reste d'un agent de couplage à m fonctionnalités et m et les n sont des nombres naturels de 1 à 10.

7. Masses de moulage thermoplastiques selon l'une quelconque des revendications 1 à 6, **caractérisées en ce que**, dans le composant (C), le poids moléculaire du bloc C_{A} se situe entre 1000 et 200.000 et celui du bloc C_{(B/A)} entre 2000 et 250.000 [g/mole].

8. Procédé de production de masses de moulage thermoplastiques selon l'une quelconque des revendications 1 à 7, **caractérisé en ce que** les composants sont mélangés par des procédés de mélange en soi connus.

9. Utilisation des masses de moulage thermoplastiques selon l'une quelconque des revendications 1 à 7 pour la production de feuilles, de pièces moulées et de fibres.

10. Pièces moulées que l'on peut obtenir en utilisant les masses de moulage thermoplastiques selon l'une quelconque des revendications 1 à 7.
